# EUROPÄISCHE PATENTSCHRIFT

(11) **EP 2 456 696 B1**
(45) Veröffentlichungstag und Bekanntmachung des Hinweises auf die Patenterteilung: **05.06.2013**
(21) Anmeldenummer: 10749460.1
(22) Anmeldetag: 22.07.2010
(51) Int. Cl.: B65G 57/03, B65G 57/06, B65G 57/22, B65G 61/00

(54) **VERFAHREN ZUR BELADUNG EINES LADUNGSTRÄGERS MIT LADEEINHEITEN**
METHOD FOR LOADING A LOAD CARRIER WITH LOADING UNITS
PROCÉDÉ PERMETTANT DE CHARGER DES UNITÉS DE CHARGEMENT SUR UN SUPPORT DE CHARGEMENT

(30) Priorität: 22.07.2009 AT 11532009
(43) Veröffentlichungstag der Anmeldung: 30.05.2012
(73) Patentinhaber: TGW Mechanics GmbH, 4600 Wels (AT)
(72) Erfinder: HANSL, Rudolf, A-4020 Linz (AT)
(74) Vertreter: Burger, Hannes
(86) Internationale Anmeldenummer: PCT/AT2010/000268
(87) Internationale Veröffentlichungsnummer: WO 2011/009150

(56) Entgegenhaltungen:
- EP-B1- 1 462 394
- WO-A1-2009/094681
- JP-A- 58 026 729
- US-A- 5 501 571
- US-A- 5 944 479

## Beschreibung

Die Erfindung betrifft ein Verfahren zur Beladung eines Ladungsträgers mit einen Ladestapel bildenden Ladeeinheiten, bei dem von einem Rechner ein Kommissionierauftrag erfasst und eine räumliche Beladungskonfiguration der Ladeeinheiten für den Ladestapel ermittelt werden und wobei die Ladeeinheiten mittels einer Positionierfördereinrichtung unmittelbar auf dieser aufliegend an die, durch die Beladungskonfiguration bestimmten Beladepositionen gefördert und an diesen auf den Ladungsträger abgegeben werden.

Aus der EP 1 462 394 B 1 ist ein derartiges Verfahren zur Beladung eines Ladungsträgers bekannt, bei dem der Ladungsträger nach einer bezüglich der Stabilität und/oder Volumenausnutzung optimierten räumlichen Beladungskonfiguration der Ladeeinheiten im Ladestapel beladen wird. Aus der Beladungskonfiguration wird eine Beladereihenfolge ermittelt, entsprechend der die Ladeeinheiten auf eine ortsfeste Ladeplatte vereinzelt angefördert werden, wo eine einzelne Ladeeinheit von einer Beschickungsfördereinrichtung in x-Richtung bis zu der vorgesehenen x-Position der Ladeeinheit in der Beladungskonfiguration des Ladestapels bewegt wird. Anschließend wird die Ladeeinheit mittels eines Abstreifers auf die in z-Richtung vorragende Positionieifördereinrichtung geschoben und mittels dieser in z-Richtung bis zu der vorgesehenen z-Position in der Beladungskonfiguration des Ladestapels bewegt. Danach wird die Positionierfördereinrichtung zurückgefahren, während der Abstreifer zunächst in seiner Position verharrt, wodurch die einzelne Ladeeinheit an der für diese vorgesehene z-Position auf dem Ladestapel abgelegt wird. Nachdem die Ladeeinheiten vereinzelt angefördert und nacheinander vereinzelt von der Beschickungsfördereinrichtung auf den Ladungsträger abgelegt werden, ist die Beladung des Ladungsträgers sehr zeitintensiv.

Aus der EP 1 659 077 A2 ist ein Verfahren zur Beladung eines Ladungsträgers bekannt, bei dem der Auftrags-Ladungsträger nach einer bezüglich der Stabilität und/oder Volumenausnutzung optimierten räumlichen Beladungskonfiguration mit auf Kommissionier-Ladungsträger übereinander gestapelte Ladeeinheiten beladen wird. Die Kommissionier-Ladungsträger benötigten ein entsprechendes Stapelvolumen im Ladestapel, sodass insgesamt die Beladungsleistung gering ist.

Die JP 2000-118717 A beschreibt ein Verfahren zur Beladung eines Ladungsträgers mit einen Ladestapel bildenden Ladeeinheiten, bei dem die Ladeeinheiten mittels einer Positionierfördereinrichtung an die, von einem Rechner durch eine Beladungskonfiguration festgelegten Beladepositionen gefördert werden. Auch nach diesem Verfahren werden die Ladeeinheiten zwar gemäß einer Beladungskonfiguration in einer Beladereihenfolge zur Beladungsvorrichtung gefördert, jedoch erfolgt keine zusätzliche Gruppierung der Ladeeinheiten abhängig von deren Abmessungen und wird deshalb nur eine begrenzte Beladungsleistung erreicht.

Aufgabe der Erfindung ist es, ein Verfahren zur Beladung eines Ladungsträgers mit Ladeeinheiten zu schaffen, das sich gegenüber den bekannten Beladeverfahren noch effizienter gestalten lässt.

Die Aufgabe der Erfindung wird durch die Maßnahmen im Anspruch 1 gelöst. Von Vorteil ist, dass die Beladung des Ladungsträgers gegenüber den aus dem Stand der Technik bekannten Beladeverfahren dann schneller erfolgen kann, wenn eine oder mehrere Stapellagen oder einzelne Stapelzeilen innerhalb einer Stapellage oder der gesamte Ladestapel durch Stapelreihen gebildet werden, wobei die Ladeeinheiten innerhalb einer Stapelreihe in z-Richtung (Stapeltiefe) durch eine Positionierfördereinrichtung in einem einzigen Beladezyklus nacheinander auf die Beladepositionen abgegeben werden. Die Ladeeinheiten werden dabei entsprechend ihrer Abmessungen in einem automatischen Sortier- und Kommissionierschritt zu einer oder mehreren Stapelreihen zusammengestellt (verdichtet).

Gemäß der Maßnahme nach den Ansprüchen 2 und 3 werden nach der Erfassung eines Kommissionierauftrags zumindest von jenen Ladeeinheiten die Abmessungen erfasst, die in einer oder mehreren Stapelreihe(n) zu diesem Kommissionierauftrag benötigt werden. Hierzu werden entweder die Abmessungen vorerst von einer Messeinrichtung erfasst und in einer Stammdaten-Datenbank gespeichert oder bereits in der Stammdaten-Datenbank hinterlegte Ladeeinheiten-Eigenschaften, wie die Abmessungen der Ladeeinheiten, nach Identifizierung einer Ladeeinheit abgerufen.

Von Vorteil ist auch die Maßnahme nach Anspruch 4, da für das breite Sortiment von mehreren Tausend unterschiedlichen Ladeeinheiten vom Rechner Abmessungsklassen mit ausgewählten Abmessungsbereichen festgelegt und nach dem Erfassen der Abmessungen vom Rechner in einer Auswerteeinheit die Ladeeinheiten gleicher oder unterschiedlicher Abmessungen jeweils einem Abmessungsbereich und einer Abmessungsklasse zugeordnet werden. Es werden Ladeeinheiten ähnlicher Abmessungen in einem automatischen Sortier- und Kommissionierschritt zu einer oder mehreren Stapelreihen zusammengestellt (verdichtet). Es können eine beliebige Anzahl von Abmessungsklassen und beliebige Abmessungsbereiche für die Länge, Breite und/oder Höhe definiert werden. Beispielsweise können die Ladeeinheiten in drei Abmessungsbereiche und Abmessungsklasse unterteilt werden. Die erste Abmessungsklasse enthält jene Ladeeinheiten, deren Länge beispielsweise zwischen 200 mm und 500 mm und Breite beispielsweise zwischen 150 mm und 350 mm beträgt. Die zweite Abmessungsklasse enthält jene Ladeeinheiten, deren Länge beispielsweise zwischen 500 mm und 700 mm und Breite beispielsweise zwischen 350 mm und 500 mm beträgt. Die dritte Abmessungsklasse enthält jene Ladeeinheiten, deren Länge beispielsweise zwischen 700 mm und 800 mm und Breite beispielsweise zwischen 500 mm und 600 mm beträgt. Die Höhe der Ladeeinheiten aller Abmessungsklassen beträgt zwischen 10 mm und 1000 mm.

Gemäß der Maßnahme nach Anspruch 5, wird die Beladung des Ladungsträgers bezüglich Stabilität des Ladestapels und/oder der Volumenausnutzung im Ladestapel optimiert.

Werden die Ladeeinheiten von der Beschickungsfördereinrichtung als Stapelreihe auf die Positionieifördereinrichtung und von dieser auf die Beladepositionen abgegeben, wie im Anspruch 6 beschrieben, wird eine hohe Durchsatzleitung und Beladeleistung erreicht.

Mit der Maßnahme nach Anspruch 7 werden eine besonders sanfte Übergabe der Ladeeinheit auf eine Ladeebene des Ladungsträgers oder einer Stapellage und ein schonender Betrieb der Positionierfördereinrichtung ermöglicht.

Eine vorteilhafte Maßnahme der Erfindung ist in Anspruch 8 beschrieben. Die Zuteilfördereinrichtung verbindet die ortsfeste Zuführeinrichtung und die in x-Richtung verstellbare Beschickungsfördereinrichtung, wodurch gleichzeitig mehrere Beladezyklen abgearbeitet werden können. So kann eine erste Stapelreihe von der Beschickungsfördereinrichtung zur Positionierfördereinrichtung gefördert und von letzterer auf den Ladungsträger umgeladen werden, während in der Zwischenzeit von der Zuteilfördereinrichtung bereits eine zweite Stapelreihe an einer Übergabeposition bereitgestellt wird. Die Zuteilfördereinrichtung kann gegenüber der Beschickungs- und Positionierfördereinrichtung in x-Richtung mit höherer Geschwindigkeit verfahren. Dadurch kann die Positionierfördereinrichtung kontinuierlich mit Stapelreihen versorgt werden und die Beladung des Ladungsträgers noch schneller erfolgen.

Gemäß Anspruch 9 werden die Ladeeinheiten der Stapelreihe von der Zuteilfördereinrichtung in einer Position bereitgestellt, die bereits der durch den Rechner festgelegten Beladeposition der "aktuellen" Stapelreihe im Ladestapel in x-Richtung entspricht.

Die Maßnahme nach Anspruch 10 ist von Vorteil, da noch während des vorangegangenen Beladezykluses einer Stapelreihe, insbesondere während der Ein- und Ausfahrbewegung der Positionierfördereinrichtung in z-Richtung, eine Stapelreihe des nächsten Beladezykluses auf der Beschickungsfördereinrichtung aufgenommen werden kann.

Es ist auch von Vorteil, wenn die Ladeeinheiten an der Positionieifördereinrichtung und einer dieser in Förderrichtung vorgeordneten Beschickungsfördereinrichtung auf einer Förderebene gleichzeitig nebeneinander in mehreren Stapelreihen und in einer einzigen Ebene gefördert werden, wie im Anspruch 11 beschrieben.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt aus einem Kommissioniersystem mit einer Vorrichtung zur automatisierten Beladung eines Ladungsträgers, in perspektivischer und vereinfachter Darstellung;
- Fig. 2: die Vorrichtung zur automatisierten Beladung des Ladungsträgers nach Fig. 1, in perspektivischer Ansicht;
- Fig. 3: eine Seitenansicht auf die Vorrichtung zur Beladung eines Ladungsträgers gemäß den Linien III - III in Fig. 2, mit einer Zuführeinrichtung, Beschickungsfördereinrichtung, Ausrichtvorrichtung und Positionierfördereinrichtung in ihrer Übernahmestellung;
- Fig. 4: eine Seitenansicht auf die Vorrichtung nach Fig. 3 mit der Positionierfördereinrichtung in einer ihrer Beladestellungen;
- Fig. 5 bis 8: eine Seitenansicht auf die Vorrichtung nach Fig. 3 mit der in ihre Übernahmestellung zurückfahrenden Positionierfördereinrichtung;
- Fig. 9 und 10: eine Vorderansicht der Vorrichtung nach Fig. 2 mit auf unterschiedlich breite Ladeeinheiten verstellten Förderbahnen und Seitenführungen einer Ausrichtvorrichtung;
- Fig. 11 bis 14: eine Sequenzdarstellung der Beladezyklen eines Ladungsträgers, in Draufsicht und vereinfachter Darstellung;
- Fig. 15a-j: eine Sequenzdarstellung der Beförderung von Ladeeinheiten mehrere Stapelreihen zu einer Vorrichtung zum Beladen eines Ladungsträgers, in Draufsicht und vereinfachter Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

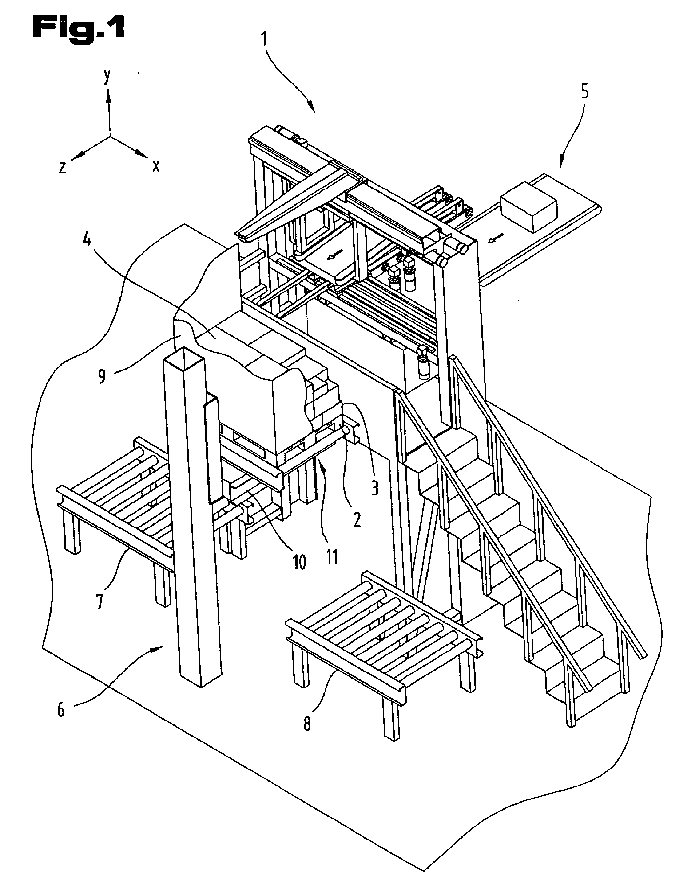

In der Fig. 1 ist ein mögliche Ausführung einer Vorrichtung 1 zum Beladen eines Ladungsträgers 2 mit einen Ladestapel 3 bildenden Ladeeinheiten 4, eine Zuführeinrichtung 5, eine Hubstation 6 zum Anheben und Absenken eines Ladungsträgers 2 und eine Fördertechnik 7, 8 zum Antransport leerer Ladungsträger 2 und Abtransport von beladenen Ladungsträgern 2 sowie eine Ladehilfe 9 aufweist. Die Hubstation 6 ist mit einer auf einem heb- und senkbaren Hubtisch 10 angeordneten Ladungsträger-Wechseleinrichtung 11 versehen, die nach diesem Ausführungsbeispiel durch einen antreibbaren Rollenförderer gebildet ist. In abgesenkter Wechselposition der Ladungsträger-Wechseleinrichtung 11 kann ein beladener Ladungsträger 2 an die Fördertechnik 7 abgegeben oder aber ein leerer Ladungsträger 2 von der Fördertechnik 8 empfangen werden.

Die zu kommissionierenden Ladeeinheiten 4 werden in einem mit der Vorrichtung 1 über Fördertechniken verbundenen, automatischen Lagersystem (nicht dargestellt) zwischengelagert und ausgelagert, wenn ein Kommissionierauftrag vorliegt. Die Ladeeinheiten 4 sind in der Regel durch Kartonagen oder durch auf einem stabilen Untersatz abgestellte und mit einer Kunststofffolie umwickelte Verpackungseinheiten (Colli) und dgl. gebildet. Üblicherweise werden die Ladeeinheiten 4 auf einem Anliefergebinde, insbesondere einer Palette, bereitgestellt.

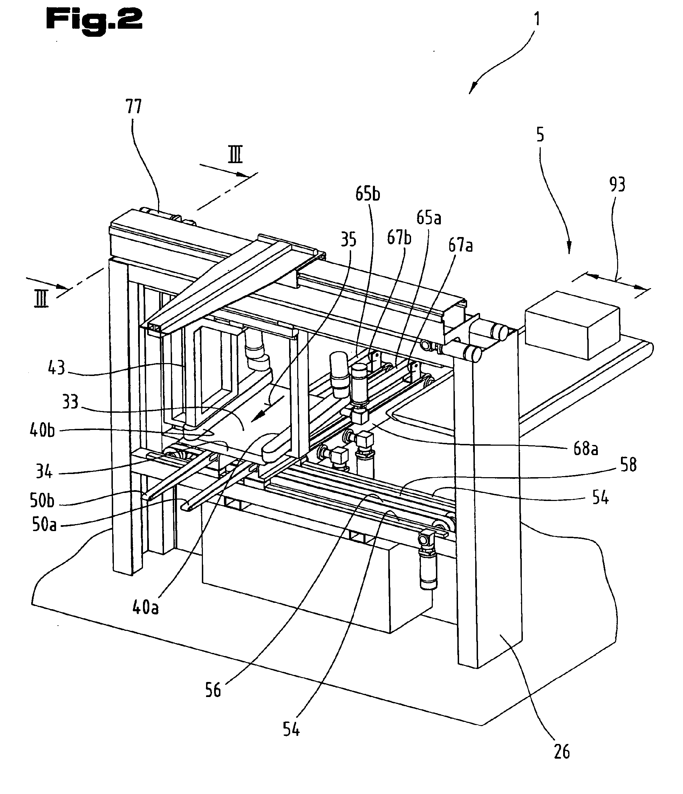

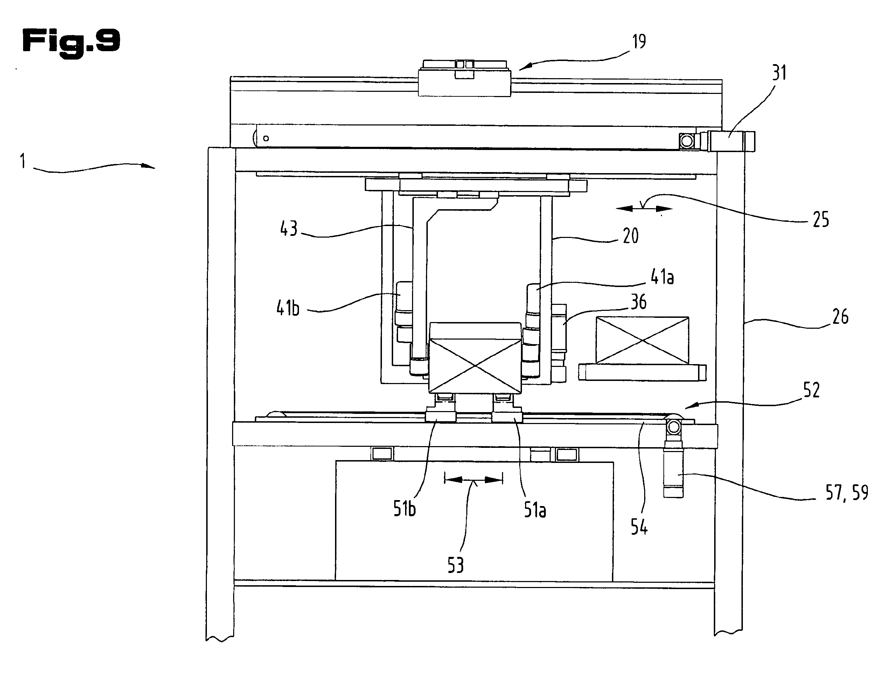

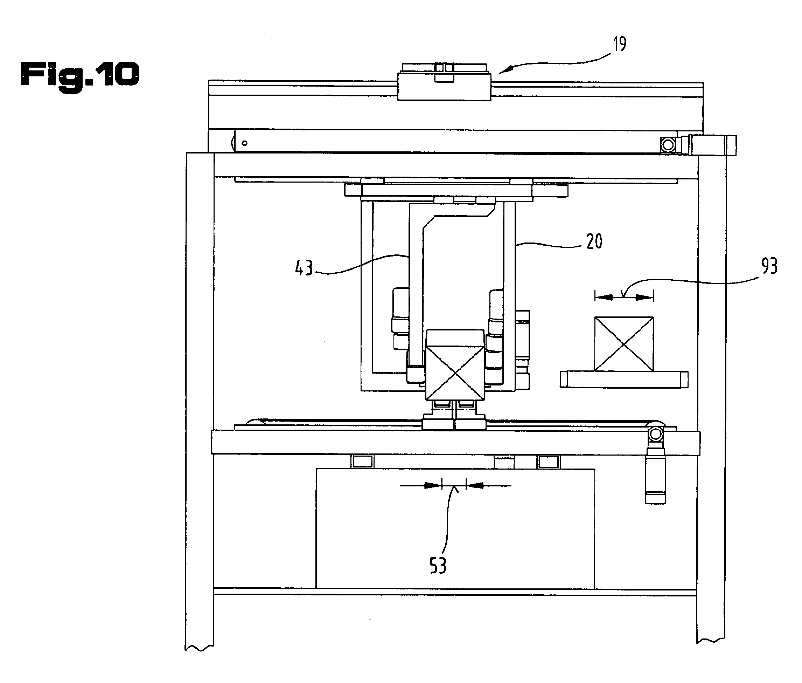

In den Fig. 2 bis 10 ist die Vorrichtung 1 zum automatisierten Beladen des Ladungsträgers 2 (Fig. 1), insbesondere einer Auftragspalette, mit den für einen Kommissionierauftrag benötigten Ladeeinheiten 4 in unterschiedlichen Ansichten gezeigt. Dabei werden die Ladeeinheiten 4, wie noch näher beschrieben wird, als eine oder mehrere Stapelreihe(n) von einer der Vorrichtung 1 vorgelagerten Fördertechnik, welche beispielsweise die Zuführeinrichtung 5 und gegebenenfalls eine Zuteilfördereinrichtung umfasst, direkt auf einer von ihr ausgebildeten Förderebene zur Vorrichtung 1 in der Beladereihenfolge gefördert und auch in der Vorrichtung 1 über eine Fördertechnik, welche beispielsweise eine Positionierfördereinrichtung 16 und Beschickungsfördereinrichtung 17 umfasst, direkt auf einer von ihr ausgebildeten Förderebene gefördert und auf dem Ladungsträger 2 an ermittelten Beladepositionen abgelegt. Demnach erfolgt sowohl die Beförderung der Ladeeinheiten 4 von einem Lagersystem zur Vorrichtung 1 und/oder Sortierung (wie noch beschrieben wird) der Ladeeinheiten 4 vor der Vorrichtung 1 und/oder die Verteilung und Beladung der Ladeeinheiten 4 durch die Vorrichtung 1 ohne Ladungsträger, insbesondere Tablar, Palette, und dgl.

Die Beschickungsfördereinrichtung 17 ist auf einem Stellwagen 20 gelagert, der einen Tragrahmen aufweist. Der Stellwagen 20 ist über eine Verstellvorrichtung 24 entlang einer Führungsanordnung, insbesondere Linearführungen 29, in x-Richtung 25 horizontal längs des Ladungsträgers 2 (Fig. 1) verstellbar auf einem Grundrahmen 26 der Vorrichtung 1 gelagert.

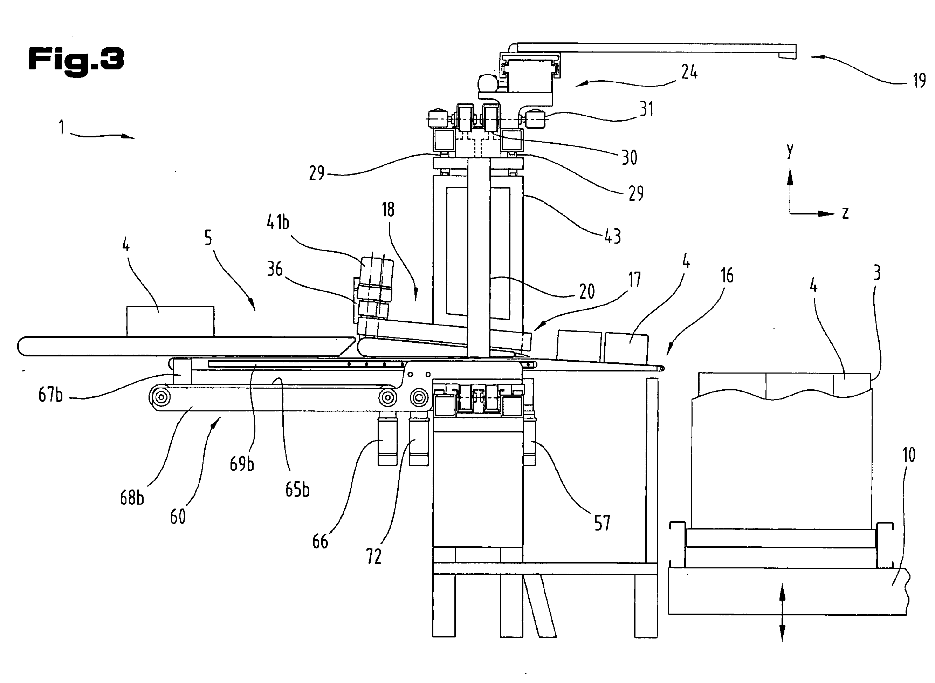

Die in Fig. 3 schematisch, dargestellte Verstellvorrichtung 24 ist durch einen Linearantrieb gebildet und weist nach gezeigtem Ausführungsbeispiel einen mit dem Stellwagen 20 verbundenen Zugmitteltrieb auf. Der Zugmitteltrieb umfasst ein endlos umlaufendes Zugmittel 30, welches um ein Umlenkrad und ein mit einem Stellmotor 31 gekuppeltes Antriebsrad geführt ist. Durch Drehbewegung des Antriebsrades im Uhrzeigersinn oder im Gegenuhrzeigersinn wird der Stellwagen 20 und die auf diesem gelagerte Beschickungsfördereinrichtung 17 horizontal längs und relativ zum Ladungsträger 2 in x-Richtung bis zu einer von einem Rechner festgelegten x-Position im Ladestapel 3 bewegt.

Die Beschickungsfördereinrichtung 17 umfasst eine Linearfördereinrichtung, insbesondere einen von einem Fördermotor 36 angetriebenen Bandförderer 33, Gurtförderer und dgl, und eine am vorderen Ende parallel zu dessen Stirnkante mit geringem Abstand angeordnete Gleitleiste 34.

Die Ausrichtvorrichtung 18 weist relativ zueinander verstellbare Seitenführungen auf, die nach diesem gezeigten Ausführungsbeispiel durch in Förderrichtung 35 der Ladeeinheiten 4 mit Abstand parallel zueinander angeordnete Fördervorrichtungen 40a, 40b gebildet sind. Jede Fördervorrichtung 40a, 40b ist mit einem Antriebsmotor 41a, 41b gekoppelt.

Nach gezeigtem Ausführungsbeispiel ist die rechte Fördervorrichtung 40a ortsfest am Tragrahmen des Stellwagens 20 angeordnet, während die linke Fördervorrichtung 40b in x-Richtung relativ zur Positionierfördereinrichtung 17 verstellbar ist. Die linke Fördervorrichtung 40b ist auf einem Stellwagen 43 angeordnet, der einen Tragrahmen aufweist. Der Stellwagen 43 ist über eine Verstellvorrichtung 44 entlang einer Führungsanordnung, insbesondere Linearführungen 45, in x-Richtung 25 verstellbar auf dem Stellwagen 20 der Positionierfördereinrichtung 17 gelagert.

Die Verstellvorrichtung 44 ist durch einen Linearantrieb gebildet und weist nach gezeigtem Ausführungsbeispiel einen Zugmitteltrieb auf. Der Zugmitteltrieb umfasst ein endlos umlaufendes Zugmittel 46, welches um ein Umlenkrad und ein mit einem Stellmotor 47 gekuppeltes Antriebsrad geführt ist. Die Drehrichtung des Stellmotors 47 ist reversibel ausgebildet, sodass der Stellwagen 43 und damit die Fördervorrichtung 40b in x-Richtung entweder auf die gegenüberliegende Fördervorrichtung 40a zu bewegt oder von dieser weg bewegt wird. Durch die Verstellung des Abstandes zwischen den Fördervorrichtungen 40a, 40b findet eine Anpassung an unterschiedliche Abmessungsklassen, wie noch beschrieben wird, statt.

Die Positionierfördereinrichtung 16 weist nach gezeigter Ausführung parallele Förderbahnen 50a, 50b auf, die jeweils auf einem Führungsschlitten 51a, 51b angeordnet und über eine erste Verstellvorrichtung 52 entlang einer Führungsanordnung in eine Übernahmestellung in x-Richtung verstellbar auf dem Grundrahmen 26 der Vorrichtung 1 gelagert sind. In der Übernahmestellung sind die Förderbahnen 50a, 50b auf einen, aus einer Ladeeinheiten-Eigenschaft, insbesondere Fördereigenschaft, einer Ladeeinheit 4 oder einer der zu stapelnden Ladeeinheiten 4 einer Stapelreihe vom Rechner ermittelten Abstand 53 eingestellt und so unterhalb der Beschickungsfördereinrichtung 17 positioniert, dass eine oder mehrere auf der Beschickungsfördereinrichtung 17 liegende Ladeeinheit(en) 4 relativ zu den Förderbahnen 50a, 50b mittig übergeben werden können.

Die Führungsanordnung ist durch Linearführungen 54 gebildet, die zwischen den Führungsschlitten 51 a, 51b und dem Grundrahmen 26 angeordnet ist.

Die Verstellvorrichtung 52 ist durch einen Linearantrieb gebildet und weist nach gezeigtem Ausführungsbeispiel einen ersten und zweiten Zugmitteltrieb auf. Der erste Zugmitteltrieb umfasst ein endlos umlaufendes Zugmittel 56, welches um ein Umlenkrad und ein mit einem Stellmotor 57 gekuppeltes Antriebsrad geführt ist. Das Zugmittel 56 ist beispielsweise durch einen Zahnriemen, eine Kette oder dgl. gebildet und mit dem die Förderbahn 50a lagernden Führungsschlitten 51a fest verbunden ist. Der zweite Zugmitteltrieb umfasst ein endlos umlaufendes Zugmittel 58, welches um ein Umlenkrad und ein mit einem Stellmotor 59 gekuppeltes Antriebsrad geführt ist. Das Zugmittel 58 ist beispielsweise durch einen Zahnriemen, eine Kette oder dgl. gebildet und mit dem die Förderbahn 50b lagernden Führungsschlitten 51b fest verbunden ist. Durch Drehen der Antriebsräder im Uhrzeigersinn oder im Gegenuhrzeigersinn, werden die Förderbahnen 50a, 50b in x-Richtung bis in ihre Übernahmestellung bewegt.

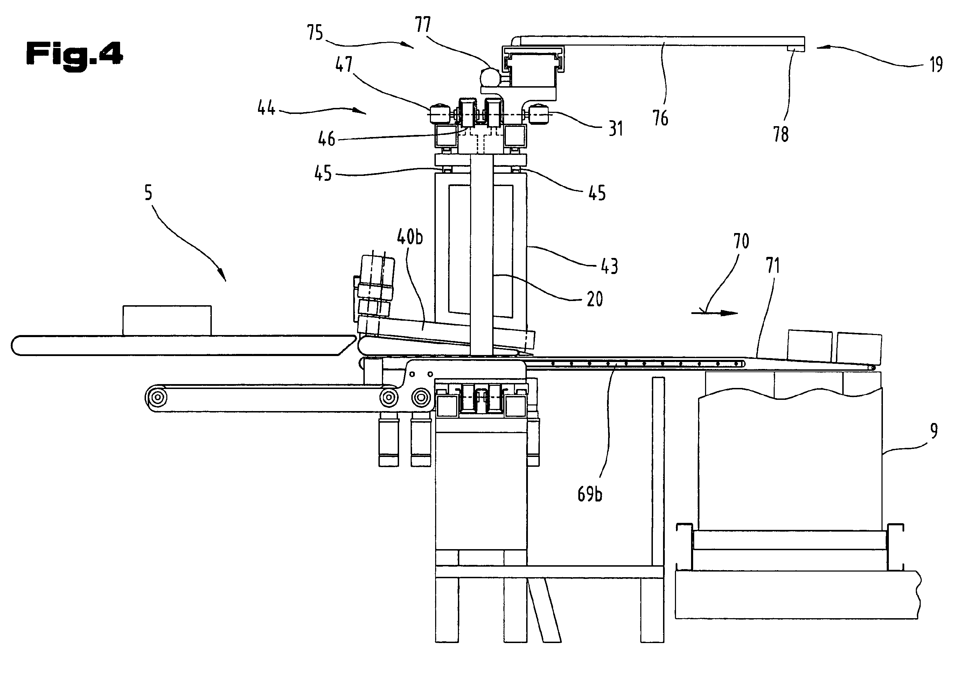

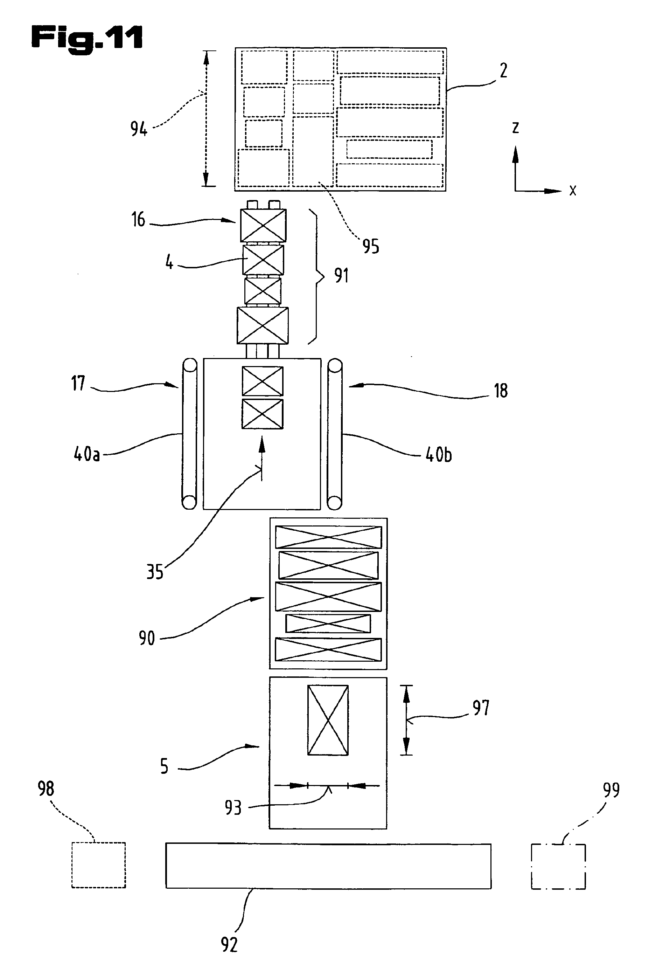

Die Förderbahnen 50a, 50b sind über eine zweite Verstellvorrichtung 60 auch in z-Richtung (Tiefenrichtung des Ladungsträgers 2) zwischen einer in Fig. 3 dargestellten, eingefahrenen Übernahmestellung und einer in Fig. 4 dargestellten, ausgefahrenen Beladestellung synchron verstellbar. Die Förderbahnen 50a, 50b ragen in ihrer Übernahmestellung in z-Richtung am vorderen Ende der Beschickungsfördereinrichtung 17 vor. In der Übernahmestellung können von der Positionierfördereinrichtung 16 entweder eine einzelne Ladeeinheit 4 oder mehrere Ladeeinheiten 4 einer Stapelreihe aufgenommen werden, wie in den Fig. 11 bis 14 gezeigt.

Die Ausfahrbewegung der Förderbahnen 50a, 50b wird durch die Verstellvorrichtung 60 ermöglicht, welche durch einen Linearantrieb gebildet und nach gezeigtem Ausführungsbeispiel einen ersten und zweiten Zugmitteltrieb aufweist. Die Zugmitteltriebe umfassen jeweils ein endlos umlaufendes Zugmittel 65a, 65b, welches um ein Umlenkrad und ein Antriebsrad geführt ist. Die Antriebsräder sind über eine nicht weiters dargestellte Antriebswelle an einen gemeinsamen Verschiebemotor 66 gekuppelt. Genauso gut kann aber jedes Antriebsrad an einen Verschiebemotor gekuppelt sein. Die Zugmittel 65a, 65b sind beispielsweise durch einen Zahnriemen, eine Kette oder dgl. gebildet, an welchem ein Koppelungsschlitten 67a, 67b befestigt ist. Die Zugmitteltriebe sind jeweils auf einem Rahmengestell 68a, 68b gelagert, wovon das rechte Rahmengestell 68a mit dem die Förderbahn 50a lagernden Führungsschlitten 51a und das linke Rahmengestell 68b mit dem die Förderbahn 50b lagernden Führungsschlitten 51b fest verbunden ist. Der Verschiebemotor 66 ist am Rahmengestell 68a befestigt.

Die Förderbahnen 50a, 50b sind jeweils über eine Führungsanordnung, insbesondere eine in den Fig. dargestellte Linearführung 69a, 69b am Führungsschlitten 51a, 51b gelagert und mit ihrem in Ausfahrrichtung 70 hinterem Ende mit dem Koppelungsschlitten 67a, 67b verbunden. Die Drehrichtung des Verschiebemotors 66 ist reversibel, sodass entsprechend der Drehrichtung die Förderbahnen 50a, 50b mit einer auf ihnen auflastenden Ladeeinheit 4 bis an die vorgesehene z-Position im Ladestapel 3 ausfahren (Fig. 4) und danach zur neuerlichen Aufnahme einer Ladeeinheit 4 oder mehreren Ladeeinheiten 4 einer Stapelreihe in die Übernahmestellung einfahren kann (Fig. 3).

Wie aus den Figuren ersichtlich, weisen die Förderbahnen 50a, 50b jeweils eine Linearfördereinrichtung mit einem Fördermittel 71, insbesondere Fördergurt, Förderband und dgl. auf, die an einem gemeinsamen Fördermotor 72 gekoppelt sind. Der Fördermotor 72 ist am Rahmengestell 68a befestigt. Genauso gut kann aber jedes Fördermittel 71 von einem Fördermotor angetrieben werden.

Andererseits kann die Positionierfördereinrichtung 16 auch durch einen in x- und z-Richtung, nicht gezeigten, verstellbaren Bandförderer gebildet sein.

Wie in den Fig. weiters eingetragen, ist am Grundrahmen 26 ein über eine Verstellvorrichtung 75 in x-Richtung verschiebbarer Haltearm 76 gelagert. Die Verstellvorrichtung 75 weist einen Stellmotor 77 und einen nicht weiters dargestellten Zugmitteltrieb auf, dessen Zugmittel mit dem Haltearm 76 verbunden ist. Am vorderen Ende des Haltearmes 76 ist die Beladungsüberwachungseinrichtung 19 zur Erfassung des Beladungszustandes, wie etwa die aktuelle Höhe des Ladestapels 3 und/oder ein Beladungsmuster in einer Stapellage angeordnet, die in Form einer akustischen oder opto-elektronischen Abtasteinrichtung 78, insbesondere eines Scanners gebildet ist.

Eine andere Ausführung der Vorrichtung 1 zum Beladen eines Ladungsträgers 2 mit einen Ladestapel 3 bildenden Ladeeinheiten 4 ist in den Fig. 11 bis 14 gezeigt und unterscheidet sich gegenüber der in den vorangegangen Fig. beschriebenen Ausführung dadurch, dass ferner zwischen der ortsfesten Zuführeinrichtung 5 und der in x-Richtung verstellbaren Beschickungsfördereinrichtung 17 eine Zuteilfördereinrichtung 90 angeordnet ist. Die Positionierfördereinrichtung 16 der Vorrichtung 1 ist entweder gemäß der vorangegangenen Ausführung getrennt von der Beschickungsfördereinrichtung 17 ausgebildet, jedoch synchron mit der Beschickungsfördereinrichtung 17 in x-Richtung (gekoppelte Verstellbewegung) verstellbar, oder über eine nicht dargestellte erste Verstellvorrichtung auf dem Tragrahmen des Stellwagens 20 der Beschickungsfördereinrichtung 17 gelagert und mit dieser gemeinsam in x-Richtung verstellbar. Über eine zweite Verstellvorrichtung kann wiederum der Abstand 53 in oben beschriebener Weise eingestellt werden.

Nach gezeigter Ausführung werden die Positionierfördereinrichtung 16 und Beschickungsfördereinrichtung 17 als eine Baueinheit gemeinsam in x-Richtung verstellt.

Wie in den Fig. schematisch eingetragen, weist die Vorrichtung 1 wiederum die Ausrichtvorrichtung 18 auf, welche die in Förderrichtung 35 der Ladeeinheiten 4 mit Abstand parallel zueinander angeordneten Seitenführungen, beispielsweise Fördervorrichtungen 40a, 40b oder Zentriervorrichtungen und dgl., umfasst, mittels welcher eine Ladeeinheit 4 auf und relativ zum Bandförderer 33 in x-Richtung positioniert bzw. zentriert werden kann.

Die Zuteilfördereinrichtung 90 ist beispielsweise durch einen Rollförderer, Bandförderer und dgl. gebildet und ist über eine nicht eingetragene Verstellvorrichtung entlang einer Führungsanordnung zwischen einer Übernahmestellung und einer Übergabestellung in x-Richtung verstellbar auf einem Grundrahmen gelagert.

Im nachfolgenden wird anhand der Fig. 3 bis 14 das erfindungsgemäße Verfahren zur automatisierten Beladung des Ladungsträgers 2 mit der Vorrichtung 1 beschrieben.

Sobald ein Kommissionierauftrag, beispielsweise zur Zusammenstellung und Verladung einer Warenlieferung für eine Einzelhandelsfiliale, an einem nicht dargestellten Rechner erfasst wurde, werden die für einen Kommissionierauftrag benötigten Ladeeinheiten 4 über eine nicht dargestellte automatisierte Entnahme-Fördertechnik, beispielsweise einem Regalfahrzeug, aus dem schematisch dargestellten Lagersystem 92 entnommen und der Vorrichtung 1 zur Beladung eines Ladungsträgers 2 zugeführt.

Noch bevor die Ladeeinheiten 4 der Vorrichtung 1 zugeführt werden, wird ein Identifizierungscode der Ladeeinheiten 4 erfasst und vom Rechner zu jeder Ladeeinheit 4 deren in einer Stammdaten-Datenbank gespeicherten Eigenschaften ermittelt. Die Ladeeinheiten-Eigenschaften (Fördereigenschaften) sind durch die Abmessungen, Geometrie, Formstabilität, Oberflächenbeschaffenheit und/oder ein Längen/Breiten/Höhenverhältnis und dgl. der Ladeeinheit 4 bestimmt und in einer Datenbank des Rechners elektronisch erfasst. Aus diesen Daten werden vom Rechner zusätzlich zu der oben beschriebenen Abstandseinstellung der Fördervorrichtungen 40a, 40b und Förderbahnen 50a, 50b eine optimierte räumliche (dreidimensionale) Beladungskonfiguration des Ladestapels 3, daher die Beladepositionen für die Ladeeinheiten 4 im Ladestapel 3 ermittelt bzw. für jede Ladeeinheit 4 eine x-Position, y-Position und z-Position im Ladestapel 3 festgelegt. Die Beladepositionen werden vom Rechner unter Berücksichtigung verschiedenster Aspekte festgelegt. So sollte der fertig gestellte Ladestapel 3 möglichst stabil und einfach transportfähig sein, daher werden schwere Ladeeinheiten 4 unten im Ladestapel 3 und leichtere Ladeeinheiten 4 oben im Ladestapel 3 positioniert. Ebenso werden empfindlichere Ladeeinheiten 4 oben im Ladestapel 3 untergebracht. Auch sollte der Ladestapel 3 möglichst dicht gepackt und möglichst hoch sein.

Demnach wird vom Rechner eine bezüglich Stabilität und/oder Volumenausnutzung des Ladestapels 3 optimierte Beladungskonfiguration bzw. optimierte Beladepositionen für die Ladeeinheiten 4 ermittelt.

Gemäß dem erfindungsgemäßen Verfahren wird neben der Ermittlung der Beladungskonfiguration zusätzlich eine Auswertung der Abmessungen der Ladeeinheiten 4 durchgeführt.

Aus dem breiten Sortiment von mehreren Tausend unterschiedlichen Ladeeinheiten 4 werden Abmessungsklassen festgelegt und vom Rechner die Ladeeinheiten 4 den Abmessungsklassen zugeordnet.

Die Abmessungsklassen können in beliebiger Anzahl variieren und beliebige Abmessungsbereiche (Länge, Breite, Höhe) definieren und sind genannte Angaben lediglich als Beispiele zu verstehen. Jede Abmessungsklasse umfasst üblicherweise mehrere Hunderte Ladeeinheiten 4 mit unterschiedlichen Abmessungen.

Die Stapelleistung der Vorrichtung 1 kann in vorteilhafter Weise erhöht werden, wenn der Rechner von den Ladeeinheiten 4 die Abmessungen analysiert, die Ladeeinheiten 4 sortiert und als einzeilige Stapelreihe(n) 91 verdichtet auf die Beladepositionen ablegt. Hierzu werden, nachdem ein Kommissionierauftrag erfasst wurde, die Abmessungen aller oder nur einiger der für diesen Kommissionierauftrag benötigten Ladeeinheiten 4 durch eine Rechenlogik, insbesondere ein am Rechner laufendes Computerprogramm, verglichen und zumindest einige der Ladeeinheiten 4 entsprechend ihren Abmessungen in eine oder mehreren Abmessungsklassen eingeteilt.

Die Abmessungen können auf unterschiedliche Weise erfasst werden.

Nach einer ersten Ausführung werden die Abmessungen, daher die Breite 93, Länge 97 und gegebenenfalls Höhe aller oder nur einiger der für diesen Kommissionierauftrag benötigten Ladeeinheiten 4, von einer nur in Fig. 11 in strichlierten Linien eingetragenen Messeinrichtung 98 erfasst. Die Messeinrichtung 98 ist am Rechner angeschlossen und vorzugsweise durch eine optische Messeinrichtung, wie ein Scanner oder ein Bildverarbeitungssystem, gebildet. Die ermittelten Abmessungen werden in einer Datenbank als Stammdaten zwischengespeichert. Danach kann der Rechner die Abmessungen der Ladeeinheiten 4 in einer elektronischen Auswerteeinheit (nicht gezeigt) vergleichen bzw. analysieren.

Die Ladeeinheiten 4 werden entsprechend der ermittelten Abmessungen vorzugsweise durch ein Computerprogramm den Abmessungsklassen elektronisch zugeteilt.

Nach einer zweiten Ausführung werden von einer elektronischen Leseeinheit 99 Daten aus einem Datenträger erfasst und anhand dieser Daten aus einer Stammdaten-Datenbank Abmessungen aufgerufen. Der Datenträger umfasst einen eindeutigen, unverwechselbaren Identifizierungscode und/oder eine Gruppenzuordnung der Ladeeinheiten 4. Der Datenträger ist vorzugsweise durch einen Barcode, Transponder, Magnetstreifen oder eine RFID-Etikette (Radio Frequency Identification Device) gebildet und auf der Ladeeinheit 4 angebracht. Der Datenträger kann auch durch einen Datenträger gebildet sein, der von Seiten des Herstellers/Lieferanten der Ladeeinheiten 4 auf das Anliefergebinde, beispielsweise einer Palette, aufgebracht wird. Die Gruppenzuordnung ist durch die Produktfamilie definiert, daher eine Gruppe von im Sortiment miteinander verbundener Artikel, wie zB Pflegeserien bei Kosmetika, Waschmittel und dgl.

Von jeder Ladeeinheit 4 werden die Artikeleigenschaften bzw. Ladeeinheiten-Eigenschaften, insbesondere die Abmessungen und/oder Gruppenzuordnungen der Ladeeinheiten 4 erfasst und als Stammdaten in einer Datenbank abrufbar hinterlegt. Wird eine Ladeeinheit 4 von der Leseeinheit 99 identifiziert, insbesondere Daten vom Datenträger, beispielsweise der Identifikationscode vom Rechner erfasst, wird anhand dieses Identifikationscodes auf die diesem zugeordnete und aus der Datenbank abrufbaren Daten, insbesondere die Abmessungen und/oder Gruppenzuordnungen der Ladeeinheiten 4 zurückgegriffen. Der Rechner kann die Ladeeinheiten-Eigenschaften, insbesondere die Abmessungen der Ladeeinheiten 4, in einer elektronischen Auswerteeinheit (nicht gezeigt) vergleichen bzw. analysieren. Aus diesen Ladeeinheiten-Eigenschaften werden vorzugsweise durch ein Computerprogramm Klassifikationsgruppen, insbesondere Abmessungsklassen, ermittelt und die Ladeeinheiten 4 nach ihrer Identifikation den Klassifikationsgruppen elektronisch zugeteilt.

Die Sortierung kann dadurch erfolgen, dass die Ladeeinheiten 4 von einer Entnahme-Fördertechnik, insbesondere einem Regalförderfahrzeug, in der erforderlichen Reihenfolge aus dem automatischen Lagersystem, in welchem die kommissionierenden Ladeeinheiten 4 zwischengelagert sind, ausgelagert und über eine Fördertechnik (nicht dargestellt) der Vorrichtung 1 zugefördert werden. Demnach bildet die Entnahme-Fördertechnik eine Sortiervorrichtung aus. Andererseits kann auch die, das Lagersystem 92 und die Vorrichtung 1 verbindende Fördertechnik eine Sortierfunktion aufweisen.

Die Ladeeinheiten 4 der einzeiligen Stapelreihe(n) 91 sind nunmehr bezüglich der Abmessungsklassen und optimierten Beladungskonfiguration des Ladestapels 3 in eine zum Stapeln erforderliche (vom Rechner ermittelte) Beladereihenfolge sortiert. Die Stapelreihe(n) 91 werden entsprechend dieser Beladereihenfolge von der Fördertechnik über die Zuführeinrichtung 5, gegebenenfalls die Zuteilfördereinrichtung 90, Beschickungsfördereinrichtung 17 in der Beladereihenfolge der Positionierfördereinrichtung 16 zugeführt.

Die einzeilige Stapelreihe 91 enthält entweder eine, den aus der Beladungskonfiguration vom Rechner ermittelten Beladepositionen 95 in z-Richtung (Stapeltiefe 94) entsprechende Anzahl von Ladeeinheiten 4, oder eine geringere Anzahl von Ladeeinheiten 4 als Beladepositionen 95 in z-Richtung (Stapeltiefe 94), sodass in dieser Stapelzeile in einem nachfolgenden Beladezyklus noch zumindest eine Ladeeinheit 4 auf der Beladeposition 95 abgelegt werden kann, wie in Fig. 11 in der mittleren Stapelzeile ersichtlich.

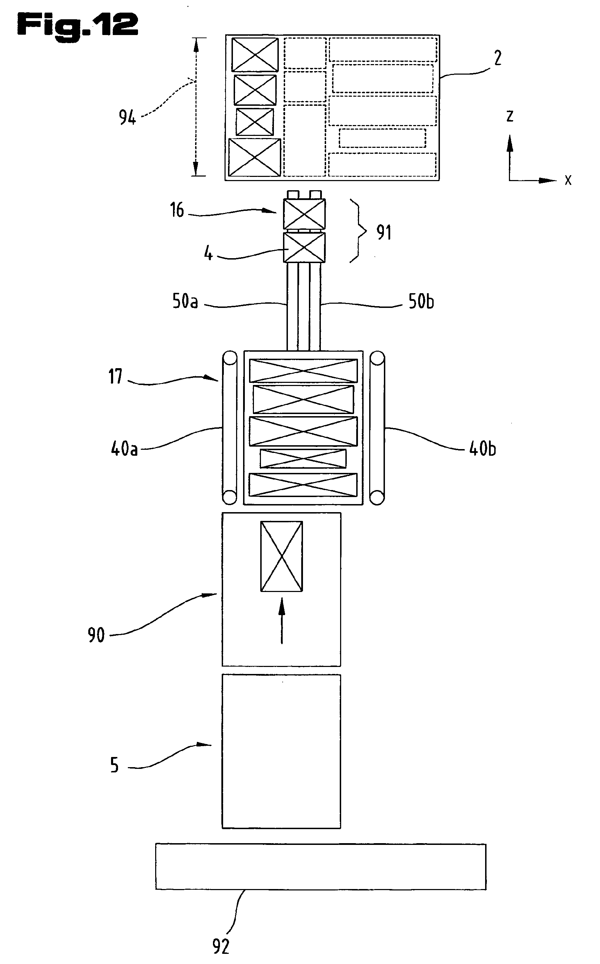

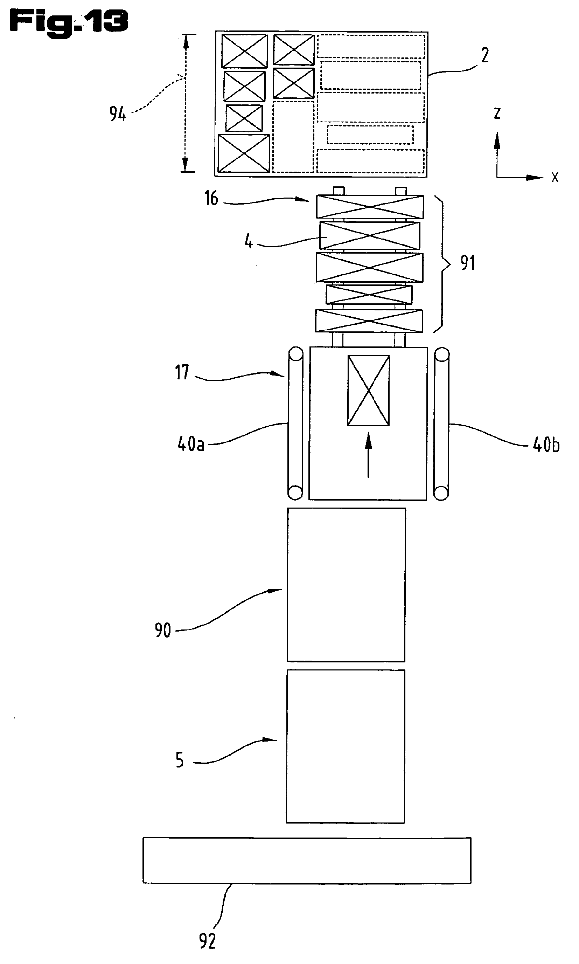

Gemäß Fig. 11 werden im ersten Beladezyklus in der linken Stapelzeile vier Ladeeinheiten 4, beispielsweise der ersten Abmessungsklasse als Stapelreihe 91 an den Beladepositionen 95 und gemäß Fig. 12 in einem zweiten Beladezyklus in der mittleren Stapelzeile zwei Ladeeinheiten 4, beispielsweise der ersten Abmessungsklasse als Stapelreihe 91 an den Beladepositionen 95 und gemäß Fig. 13 in einem dritten Beladezyklus in der rechten Stapelzeile vier Ladeeinheiten 4, beispielsweise der zweiten Abmessungsklasse als Stapelreihe 91 an den Beladepositionen 95 abgelegt.

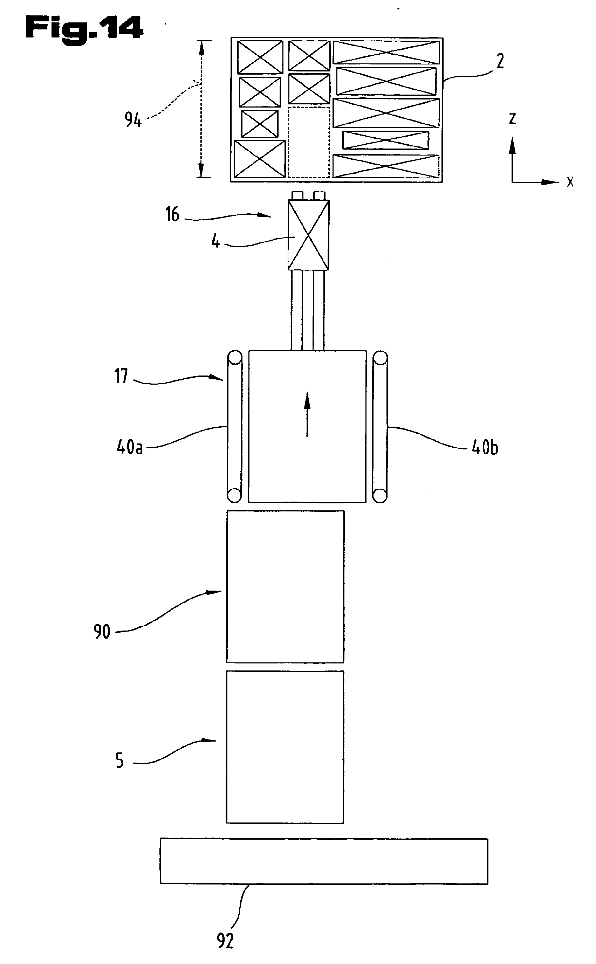

In der mittleren Stapelzeile ist beispielsweise noch eine Beladeposition 95 frei, an der in einem vierten Beladezyklus eine vereinzelte Ladeeinheit 4, beispielsweise der dritten Abmessungsklasse abgelegt werden kann, wie in Fig. 14 gezeigt.

Die zu stapelnde Ladeeinheit 4 oder die Ladeeinheiten 4 der Stapelreihe 91 wird gegebenenfalls noch vor ihrer Übergabe auf die in die Übernahmestellung bewegten Förderbahnen 50a, 50b zwischen den relativ zueinander verstellbaren Fördervorrichtungen 40a, 40b in zur Förderrichtung 35 der Ladeeinheiten 4 paralleler Richtung ausgerichtet. Durch die Verstellung des Abstandes zwischen den Fördervorrichtungen 40a, 40b findet eine Anpassung an unterschiedliche Abmessungsklassen statt.

Vor der Übergabe der einzelnen Ladeeinheit 4 oder Ladeeinheiten 4 der Stapelreihe 91 von der Beschickungsfördereinrichtung 17 auf die Positionierfördereinrichtung 16 werden die Förderbahnen 50a, 50b noch in die Übernahmestellung bewegt, in welcher abhängig von der Ladeeinheiten-Eigenschaft der Abstand 53 eingestellt ist und die Ladeeinheit(en) 4 relativ zu den Förderbahnen 50a, 50b mittig übergeben werden kann. Der Abstand 53 wird auf die Breite 93 (Ladeeinheiten-Eigenschaft) der einzelnen Ladeeinheit 4 oder auf die kleinste Breite 93 (Ladeeinheiten-Eigenschaft) der Ladeeinheiten 4 einer Stapelreihe 91 eingestellt. Danach wird die Ladeeinheit 4 oder die Stapelreihe 91 von der Beschickungsfördereinrichtung 17 auf die Positionierfördereinrichtung 16 gefördert. Befindet sich eine vereinzelte Ladeeinheit 4 oder die Stapelreihe 91 auf der Positionierfördereinrichtung 16, wird diese in x-Richtung soweit verfahren, dass die Ladeeinheit 4 oder die Stapelreihe 91 an der vorgesehenen x-Position im Ladestapel 3 positioniert ist.

Der Beladevorgang des Ladungsträgers 2 wird anhand der Fig. 3 bis 8 beschrieben, wobei nach gezeigtem Ausführungsbeispiel in zumindest einer von mehreren Stapellagen 96 in einem einzigen Beladezyklus beispielsweise zwei Ladeeinheiten 4, daher eine Stapelreihe 91 an die Beladepositionen 95 abgegeben werden.

Nachdem die Ladeeinheiten 4 der Stapelreihe 91 von der Positionierfördereinrichtung 16 übernommen wurden, werden die Förderbahnen 50a, 50b aus ihrer in Fig. 3 gezeigten Übernahmestellung relativ zur Beschickungsfördereinrichtung 17 in die in Fig. 4 gezeigte erste Beladestellung ausgefahren, in welcher sich die relativ zur Ausfahrrichtung 70 erste Ladeeinheit 4 oberhalb ihrer vorgesehenen x- und z-Position im Ladestapel 3 befindet. Die Ladeeinheiten 4 liegen auf den Fördermitteln 71 auf. Während der Ausfahrbewegung der Förderbahnen 50a, 50b können durch Antrieb der Fördermittel 71 die Ladeeinheiten 4 auf der Positionierfördereinrichtung 16 positioniert werden, insbesondere bis an dessen vorderes Ende transportiert werden.

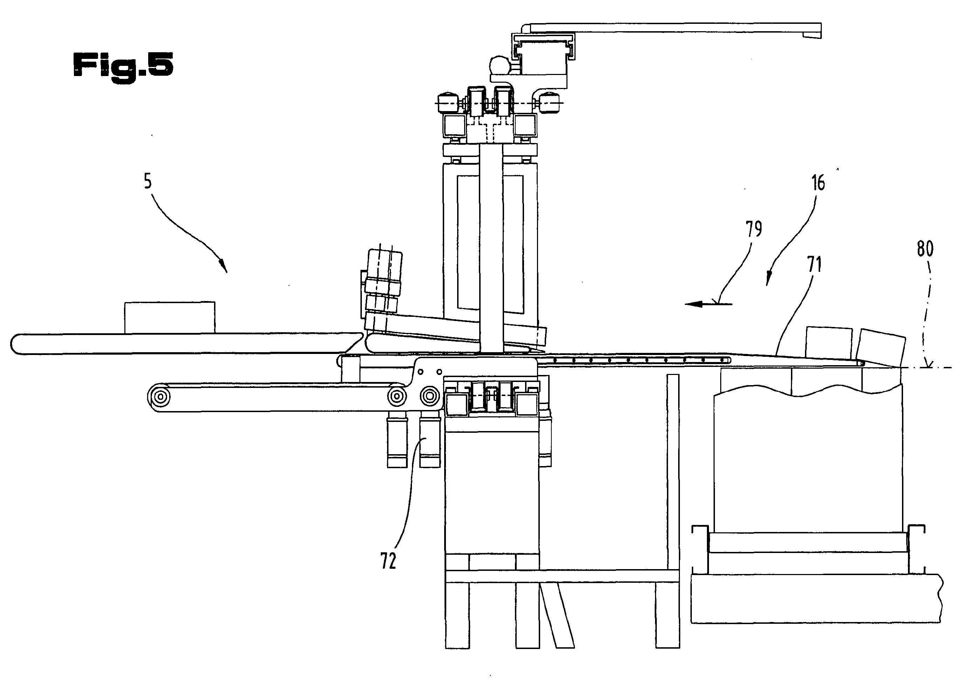

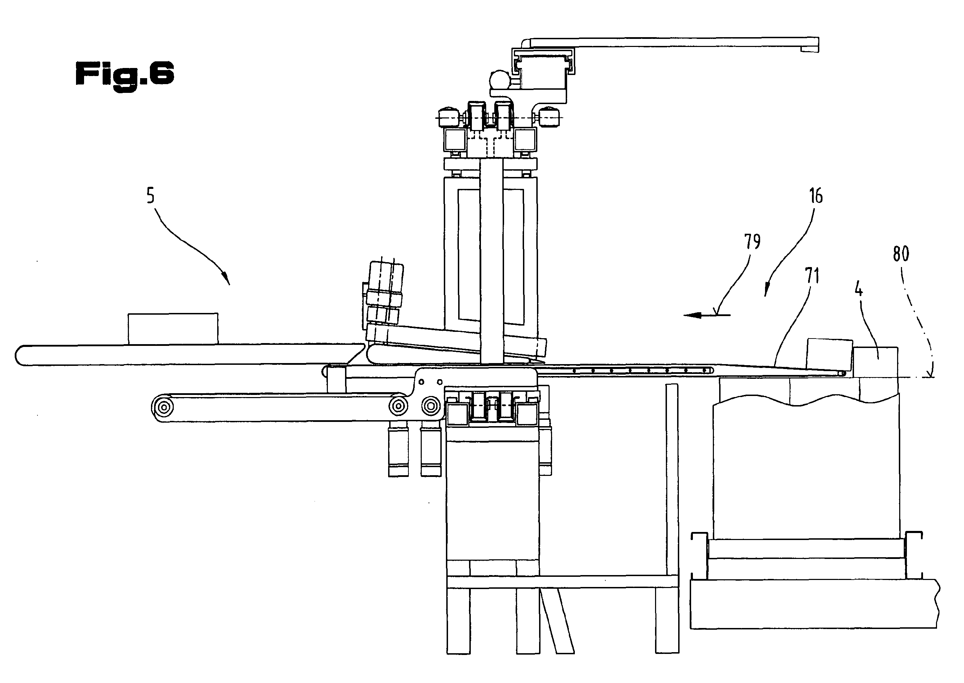

Danach werden die Förderbahnen 50a, 50b zusammen mit den Fördermitteln 71 in Rückfahrrichtung 79 zurückgezogen, wobei gleichzeitig die Fördermittel 71 auflageseitig über den Fördermotor 72 entgegen der Rückfahrrichtung 79 in Förderrichtung 35 der Ladeeinheiten 4 angetrieben wird. Die Fördergeschwindigkeit der Fördermittel 71 entspricht dabei betragsmäßig der Rückfahrgeschwindigkeit der Förderbahnen 50a, 50b, sodass die Fördermittel 71, insbesondere die Förderbänder unten an der Unterseite der Ladeeinheiten 4 ohne Relativverschiebung zu den Ladeeinheiten 4 verstellt werden. Der ersten Ladeeinheit 4 wird ihre Auflage auf den Fördermitteln 71 entzogen, sodass sie mit ihren in Rückfahrrichtung 79 hinterem Ende auf die tiefer gelegene Ladeebene 80 des Ladungsträgers 2 oder einer Stapellage kippt und an der ersten Beladeposition 95 abgestellt wird, wie in den Fig. 5 und 6 dargestellt.

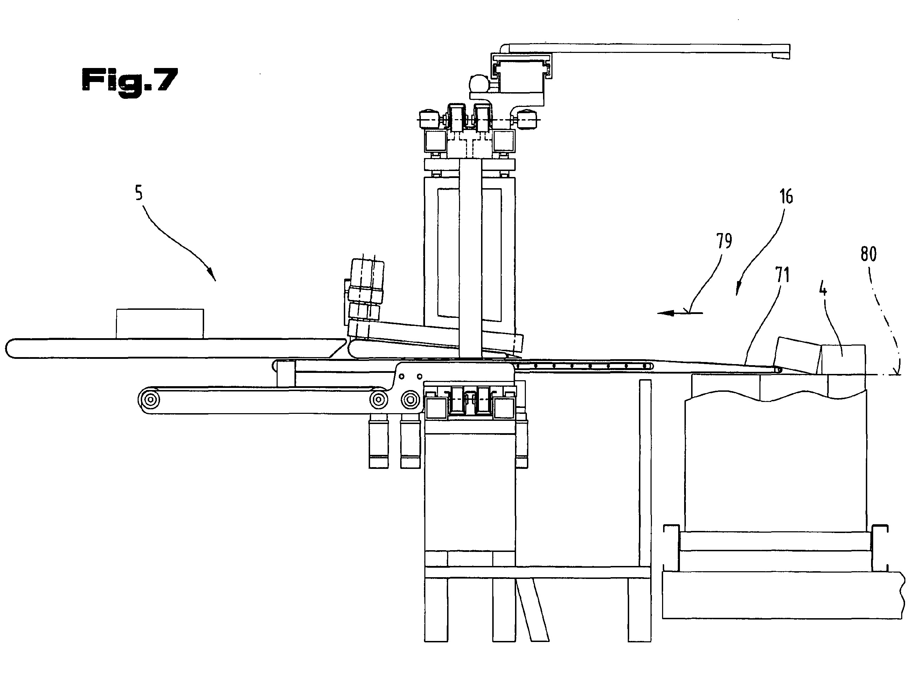

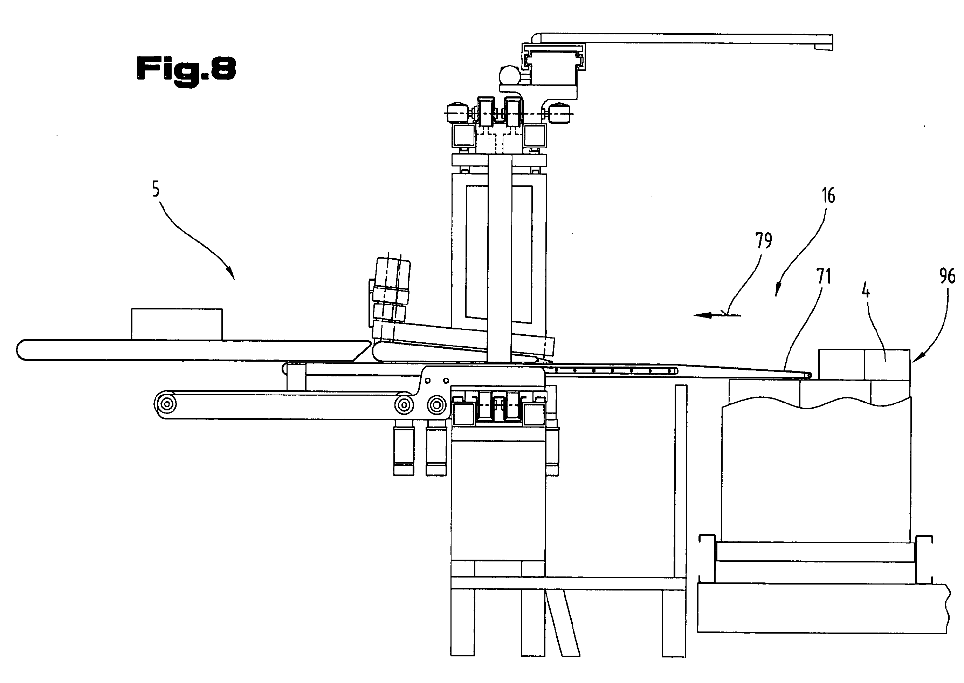

Die Förderbahnen 50a, 50b werden, nachdem die erste Ladeeinheit 4 abgelegt wurde, in Rückfahrrichtung 79 in eine zweite Beladestellung bewegt und gleichzeitig die Fördermittel 71 auflageseitig über den Fördermotor 72 entgegen der Rückfahrrichtung 79 in Förderrichtung 35 der Ladeeinheiten 4 angetrieben, sodass nun auch der zweiten Ladeeinheit 4 ihre Auflage auf den Fördermitteln 71 entzogen wird und die zweite Ladeeinheit 4 mit ihren in Rückfahrrichtung 79 hinterem Ende auf die tiefer gelegene Ladeebene 80 des Ladungsträgers 2 oder einer Stapellage kippt und an der zweiten Beladeposition 95 abgestellt wird, wie in den Fig. 7 und 8 dargestellt. In der zweiten Beladestellung befindet sich die relativ zur Ausfahrrichtung 70 zweite Ladeeinheit 4 oberhalb ihrer vorgesehenen x- und z-Position im Ladestapel 3.

Nachdem auch die zweite Ladeeinheit 4 abgelegt wurde, fahren die Förderbahnen 50a, 50b in ihre Übernahmestellung zurück, wo sie neuerlich eine einzelne Ladeeinheit 4 oder mehrere Ladeeinheiten 4 einer Stapelreihe 91 übernehmen.

Es können noch in derselben Stapellage 96 in weiteren Beladezyklen Ladeeinheiten 4 als Stapelreihen 91 an den Beladepositionen 95 abgegeben werden, wie dies in den Fig. 11 bis 13 gezeigt ist. Auch können in der Stapellage 96 Ladeeinheiten 4 vereinzelt in aufeinander folgenden Beladezyklen an den Beladepositionen 95 abgegeben werden, wie dies in Fig. 14 gezeigt ist.

Die zu stapelnde Ladeeinheit 4 soll in z-Richtung möglichst dicht an der bereits in der Stapellage 96 vorhandenen Ladeeinheit 4 oder einem Wandteil der Ladehilfe 9 anliegen. Dies wird erreicht, wenn die Fördergeschwindigkeit der Fördermittel 71 geringfügig größer ist als die Rückfahrgeschwindigkeit der Förderbahnen 50a, 50b.

Der Beladevorgang ist beendet, wenn die Ladeeinheiten 4 auf der Ladeebene 80 aufliegen und die Fördermittel 71 vollständig unter der betreffenden Ladeeinheit 4 fortbewegt sind, wie in den Fig. 6 und 8 dargestellt.

Sobald eine Lage im Ladestapel 3 fertig gestapelt ist, wird der Aufnahmetisch 10 in y-Richtung nach unten bewegt, worauf eine neuerliche Lage im Ladestapel 3 erstellt werden kann.

Aus obigem Ausführungsbeispiel wird ersichtlich, dass die Positionierfördereinrichtung 16 in einem einzigen Beladezyklus gleichzeitig mehrere Ladeeinheiten 4 manipuliert. Dadurch wird gegenüber solchen aus dem Stand der Technik bekannten Beladevorgängen, bei denen eine erste Ladeeinheit 4 von der Positionierfördereinrichtung 16 übernommen und an die erste Beladeposition gefördert wird und danach eine zweite Ladeeinheit 4 von der Positionierfördereinrichtung 16 übernommen und an die zweite Beladeposition gefördert wird, die Anzahl der Verstellbewegungen der Positionierfördereinrichtung 16 in z-Richtung erheblich reduziert und damit eine wesentliche Leistungssteigerung der Vorrichtung 1 erreicht.

Wie in den Fig. 3 bis 8 eingetragen, ist eine Ladehilfe 9 vorgesehen, die den sich bildenden Ladestapel 3 von drei Seiten umgibt und so als Abstützfläche für eine Schiebebewegung der Ladeeinheit 4 in Horizontalrichtung dienen kann.

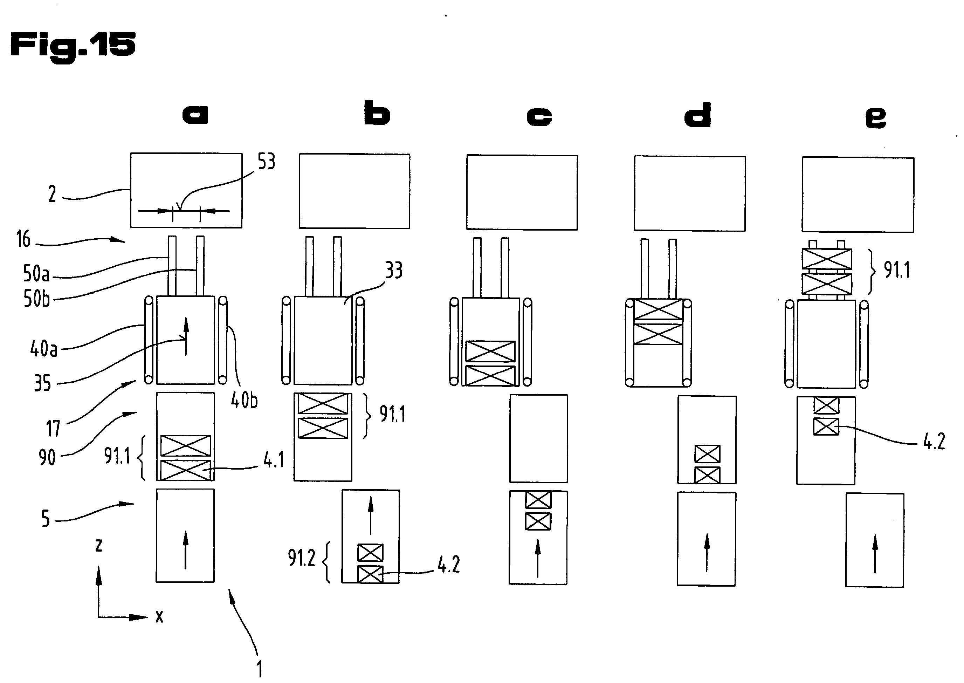

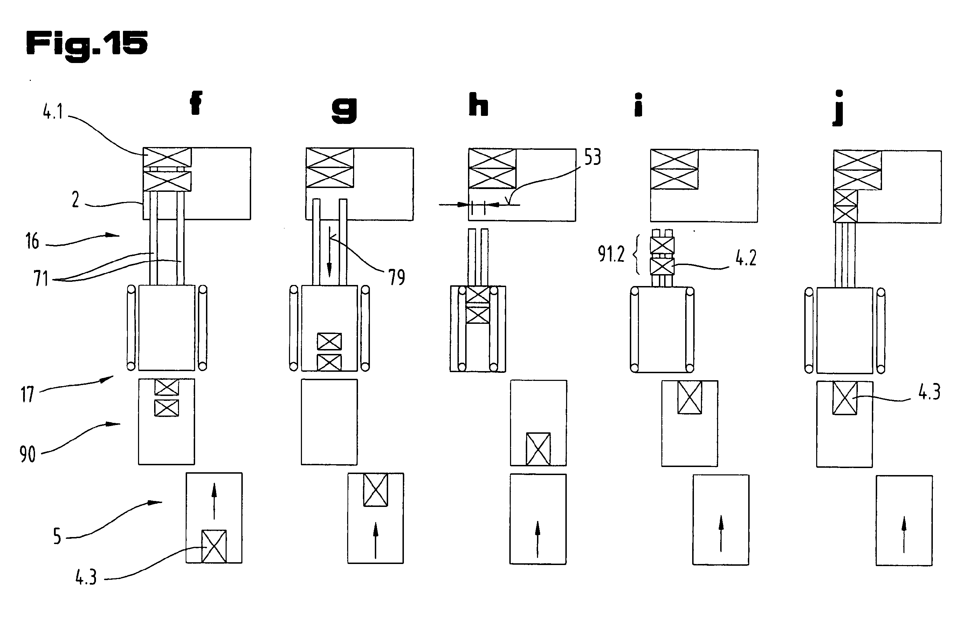

Im Nachfolgenden wird unter Bezugnahme auf die Sequenzdarstellung von Fig. 15 eine bevorzugte Beförderung der Ladeeinheiten 4 von der Zuführeinrichtung 5 bis auf den Ladungsträger 2 erläutert:
In Fig. 15a wird eine erste Stapelreihe 91.1 mit den Ladeeinheiten 4.1 von der ortsfesten Zuführeinrichtung 5 auf die in die Übernahmestellung in x-Richtung verstellte Zuteilfördereinrichtung 90 gefördert. Danach wird die Zuteilfördereinrichtung 90 in die Übergabestellung in x-Richtung verstellt und die Stapelreihe 91.1 in Richtung zur Beschickungsfördereinrichtung 17 bis in eine Übergabeposition gefördert, wie in Fig. 15b gezeigt, daher ist die erste Stapelreihe 91.1 in x-Richtung positioniert.

Die Positionierung der ersten Stapelreihe 91.1 in x-Richtung erfolgt in einem ersten Beladezyklus derart, dass sich die Ladeeinheiten 4.1 in der Übergabeposition bereits in der, durch den Rechner festgelegten Beladeposition für den Ladestapel 3 in x-Richtung befinden, wie in Fig. 15b gezeigt. Ebenso sind die Positionier- und Beschickungsfördereinrichtung 16, 17 in x-Richtung positioniert und die Förderbahnen 50a, 50b auf den oben beschriebenen Abstand 53 eingestellt und so unterhalb der Beschickungsfördereinrichtung 17 positioniert, dass die Ladeeinheiten 4.1 relativ zu den Förderbahnen 50a, 50b mittig übergeben werden können.

Wie aus den Fig. 15c-d ersichtlich, wird die erste Stapelreihe 91.1 von der Zuteilfördereinrichtung 90 auf die Beschickungsfördereinrichtung 17 gefördert und bevorzugt zwischen den Seitenführungen, beispielsweise Fördervorrichtungen 40a, 40b, in x-Richtung ausgerichtet. Nach erfolgter Übergabe der Ladeeinheiten 4.1 wird die Zuteilfördereinrichtung 90 aus ihrer Übergabestellung in die Übernahmestellung in x-Richtung verfahren und von ihr eine zweite Stapelreihe 91.2 übernommen.

Wie in Fig. 15e gezeigt, wird die gegebenenfalls ausgerichtete, erste Stapelreihe 91.1 von der in die Übernahmestellung verstellten Positionierfördereinrichtung 16 übernommen.

Nachdem die erste Stapelreihe 91.1 von der Positionierfördereinrichtung 16 übernommen wurde, werden die Förderbahnen 50a, 50b aus ihrer in Fig. 15e gezeigten Übernahmestellung in z-Richtung in die in Fig. 15f gezeigte Beladestellung ausgefahren. Die Fördermittel 71 der Positionierfördereinrichtung 16 werden während des Zurückfahrens entgegen einer Rückfahrrichtung 79 bewegt und dabei die Ladeeinheiten 4.1 nacheinander ohne Relativverschiebung zu den Fördermitteln 71 an die festgelegten Beladepositionen abgegeben.

Der erste Beladezyklus ist beendet, wenn die Ladeeinheiten 4.1 abgelegt wurden und die Fördermittel 71 vollständig unter den Ladeeinheiten 4.1 fortbewegt sind.

Wie aus den Sequenzdarstellungen ersichtlich, wird bereits während des Beladezyklus der ersten Stapelreihe 91.1 der Beladezyklus der zweiten Stapelreihe 91.2 gestartet.

Im zweiten Beladezyklus wird vorerst auf der Zuführeinrichtung 5 eine zweite Stapelreihe 91.2 angefördert/bereitgestellt und währenddessen die Zuteilfördereinrichtung 90 aus ihrer in Fig. 15b gezeigten Übergabestellung in die in Fig. 15c gezeigten Übernahmestellung in x-Richtung verstellt. In der Übernahmestellung werden die Ladeeinheit 4.2 der zweiten Stapelreihe 91.2 von der Zuführeinrichtung 5 auf die Zuteilfördereinrichtung 90 gefördert. Befinden sich die zweiten Ladeeinheiten 4.2 auf der Zuteilfördereinrichtung 90 wird diese neuerlich in die Übergabestellung verfahren und die zweite Stapelreihe 91.2 in Richtung zur Beschickungsfördereinrichtung 17 bis in eine Übergabeposition gefördert, wie in Fig. 15e gezeigt.

Die Positionierung der zweiten Stapelreihe 91.2 in x-Richtung erfolgt im zweiten Beladezyklus derart, dass sich die Ladeeinheiten 4.2 der zweiten Stapelreihe 91.2 in der Übergabeposition noch nicht in der durch den Rechner festgelegten Beladeposition im Ladestapel 3 in x-Richtung befinden. Wie der Fig. 15f entnommen werden kann, wird die Zuteilfördereinrichtung 90 in x-Richtung in die Übergabestellung bewegt, in welcher sich die Ladeeinheiten 4.2 der zweiten Stapelreihe 91.2 in der Übergabeposition befinden, die der, durch den Rechner für die Ladeeinheiten 4.2 festgelegten Beladeposition im Ladestapel 3 in x-Richtung entspricht. Demnach ist die Übergabeposition unabhängig von der späteren Beladeposition der Ladeeinheit 4.2 im Ladestapel 3 in x-Richtung.

Wie in Fig. 15g gezeigt, erfolgt die Übergabe der zweiten Stapelreihe 91.2 von der Zuteilfördereinrichtung 90 auf die Beschickungsfördereinrichtung 17 während dem Beladevorgang der ersten Stapelreihe 91.1, daher während dem Ausfahren der Förderbahnen 50a, 50b mit der ersten Stapelreihe 91.1 und/oder Einfahren der Förderbahnen 50a, 50b in die Übernahmestellung und Abgabe der ersten Stapelreihe 91.1 auf die Ladeebene.

Befinden sich die Ladeeinheiten 4.2 der zweiten Stapelreihe 91.2 auf der Beschickungsfördereinrichtung 17, werden diese durch eine Verstellbewegung der Beschickungsfördereinrichtung 17 in die festgelegte Beladeposition in x-Richtung befördert und von den Seitenführungen , beispielsweise Fördervorrichtungen 40a, 40b, ausgerichtet, wie in Fig. 15h gezeigt. Ebenso wird die Positionierfördereinrichtung 16 in x-Richtung positioniert und die Förderbahnen 50a, 50b auf den oben beschriebenen Abstand 53 eingestellt und so unterhalb der Beschickungsfördereinrichtung 17 positioniert, dass die Ladeeinheiten 4.2 relativ zu den Förderbahnen 50a, 50b auf die in die Übernahmestellung verstellte Positionierfördereinrichtung 16 mittig übergeben werden können.

Wie aus den Sequenzdarstellungen ersichtlich, wird bereits während des Beladezyklus der zweiten Stapelreihe 91.2 der Beladezyklus der dritten Stapelreihe 91.3 gestartet.

Dabei wird die Zuteilfördereinrichtung 90 nach der Übergabe der Ladeeinheiten 4.2 der zweiten Stapelreihe 91.2 auf die Beschickungsfördereinrichtung 17 aus ihrer Übergabestellung (Fig. 15g) in die Übernahmestellung (Fig. 15h) in x-Richtung verfahren und von ihr eine dritte Ladeeinheit 4.3 übernommen, wie in Fig. 15h dargestellt. Befinden sich die Ladeeinheiten 4.3 einer dritten Stapelreihe 91.3 auf der Zuteilfördereinrichtung 90, verfährt diese neuerlich in die Übergabestellung, in der sich die Ladeeinheiten 4.3 der dritten Stapelreihe 91.3 in der Übergabeposition befinden, wie in Fig. 15i dargestellt. Dabei ist die Übergabeposition entweder durch die Beladeposition der aktuell geförderten Ladeeinheit 4.3 oder vorangegangen Ladeeinheiten 4.2 oder durch die Ist-Position der Beschickungsfördereinrichtung 17 in x-Richtung festgelegt.

Nachdem die Übergabeposition entweder durch die Beladeposition der aktuell geförderten Ladeeinheit(en) oder vorangegangen Ladeeinheit(en) vom Rechner erfasst oder durch die Ist-Position der Beschickungsfördereinrichtung 17 in x-Richtung vorgegeben wird, kann auch die Übergabestellung der Zuteilfördereinrichtung 90 vom Rechner festgelegt und die Zuteilfördereinrichtung 90 in diese verfahren werden.

Wird die Übergabeposition für eine Ladeeinheit oder die Ladeeinheiten durch die Ist-Position der Beschickungsfördereinrichtung 17 in x-Richtung vorgegeben, wird der Verfahrweg der Beschickungsfördereinrichtung 17 in x-Richtung erfasst und die Zuteilfördereinrichtung 90 anhand der erfassten Ist-Position relativ zur Beschickungsfördereinrichtung 17 verfahren und dabei die Ladeeinheit(en) in x-Richtung in der Übergabeposition bereitgestellt. Die Erfassung des Verfahrweges erfolgt über ein nicht weiter dargestelltes Wegmesssystem, mittels welchem die Ist-Position des Stellwagens 20 sensorisch erfasst wird.

Andererseits kann auch der Stellmotor 31 für den Verstellwagen 20 beispielsweise mit einem Resolver bzw. Inkremental- oder Absolutwertgeber als Positioniersystem versehen werden, mittels dem die Ist-Position des Stellwagens 20 permanent erfasst wird.

Es sei noch darauf hingewiesen, dass eine einzeilige Stapelreihe 91 entweder aus zwei oder mehreren Ladeeinheiten 4 mit unterschiedlichen Abmessungen, die innerhalb eines Abmessungsbereiches liegen und in diese eingeteilt werden, oder aus ausschließlich zwei oder mehreren Ladeeinheiten 4 mit denselben Abmessungen enthalten kann. Auch ist es möglich, dass die Fördertechniken, welche beispielsweise die Zuführeinrichtung 5 und gegebenenfalls eine Zuteilfördereinrichtung bzw. die Positionierfördereinrichtung 16 und Beschickungsfördereinrichtung 17 umfassen, jeweils eine Förderebene ausbilden, auf der in Förderrichtung 35 nebeneinander gleichzeitig mehrere, beispielsweise zwei Stapelreihen 91 gefördert werden können. Die Ladeeinheiten 4 der einzeiligen oder mehrzeiligen Stapelreihe 91 werden bevorzugt aber stets in einer einzigen Ebene hintereinander oder hinter- und nebeneinander gefördert, sodass die Ladeeinheiten 4 über die Fördertechniken mit hoher Fördergeschwindigkeit durch das Lagersystem als auch mit der Vorrichtung 1 gefördert werden können.

Der Ordnung halber sei abschließend darauf hingewiesen, dass zum besseren Verständnis des Aufbaus der Vorrichtung 1 diese bzw. deren Bestandteile teilweise unmaßstäblich und/oder vergrößert und/oder verkleinert dargestellt wurden.

### Bezugszeichenaufstellung

| | | | |
|---|---|---|---|
| 1 | Vorrichtung | 40b | Fördervorrichtung |
| 2 | Ladungsträger | 41a | Antriebsmotor |
| 3 | Ladestapel | 41b | Antriebsmotor |
| 4 | Ladeeinheit | 42 | |
| 5 | Zuführeinrichtung | 43 | Stellwagen |
| | | | |
| 6 | Hubstation | 44 | Verstellvorrichtung |
| 7 | Fördertechnik | 45 | Linearführung |
| 8 | Fördertechnik | 46 | Zugmittel |
| 9 | Ladehilfe | 47 | Stellmotor |
| 10 | Hubtisch | 48 | |
| | | | |
| 11 | Ladungsträger-Wechseleinrichtung | 49 | |
| 12 | | 50a | Förderbahn |
| 13 | | 50b | Förderbahn |
| 14 | | 51a | Führungsschlitten |
| 15 | | 51b | Führungsschlitten |
| | | | |
| 16 | Positionierfördereinrichtung | 52 | Verstellvorrichtung |
| 17 | Beschickungsfördereinrichtung | 53 | Abstand |
| 18 | Ausrichtvorrichtung | 54 | Linearführung |
| 19 | Beladungsüberwachungseinrichtung | 55 | |
| 20 | Stellwagen | 56 | Zugmittel |
| | | | |
| 21 | | 57 | Stellmotor |
| 22 | | 58 | Zugmittel |
| 23 | | 59 | Stellmotor |
| 24 | Verstellvorrichtung | 60 | Verstellvorrichtung |
| 25 | x-Richtung | 61 | |
| | | | |
| 26 | Grundrahmen | 62 | |
| 27 | | 63 | |
| 28 | | 64 | |
| 29 | Linearführung | 65a | Zugmittel |
| 30 | Zugmittel | 65b | Zugmittel |
| | | | |
| 31 | Stellmotor | 66 | Verschiebemotor |
| 32 | | 67a | Koppelungsschlitten |
| 33 | Bandförderer | 67b | Koppelungsschlitten |
| 34 | Gleitleiste | 68a | Rahmengestell |
| 35 | Förderrichtung | 68b | Rahmengestell |
| | | | |
| 36 | Fördermotor | 69a | Linearführung |
| 37 | | 69b | Linearführung |
| 38 | | 70 | Ausfahrrichtung |
| 39 | | 71 | Fördermittel |
| 40a | Fördervorrichtung | 72 | Fördermotor |
| 73 | | | |
| 74 | | | |
| 75 | Verstellvorrichtung | | |
| 76 | Haltearm | | |
| 77 | Stellmotor | | |
| | | | |
| 78 | Abtasteinrichtung | | |
| 79 | Rückfahrrichtung | | |
| 80 | Ladeebene | | |
| 81 | | | |
| 82 | | | |
| | | | |
| 83 | | | |
| 84 | | | |
| 85 | | | |
| 90 | Zuteilfördereinrichtung | | |
| 91 | Stapelreihe | | |
| | | | |
| 92 | Lagersystem | | |
| 93 | Breite | | |
| 94 | Stapeltiefe | | |
| 95 | Beladeposition | | |
| 96 | Stapellage | | |
| | | | |
| 97 | Länge | | |
| 98 | Messeinrichtung | | |
| 99 | Leseeinheit | | |

## Patentansprüche

1. Verfahren zur Beladung eines Ladungsträgers (2) mit einen Ladestapel (3) bildenden Ladeeinheiten (4), bei dem von einem Rechner ein Kommissionierauftrag erfasst und eine räumliche Beladungskonfiguration der Ladeeinheiten (4) für den Ladestapel (3) ermittelt werden und wobei die Ladeeinheiten (4) mittels einer Positionierfördereinrichtung (16) unmittelbar auf dieser aufliegend an die, durch die Beladungskonfiguration bestimmten Beladepositionen (95) gefördert und an diesen auf den Ladungsträger (2) abgegeben werden, **dadurch gekennzeichnet, dass** nach dem Erfassen des Kommissionierauftrags vom Rechner, insbesondere einer elektronischen Auswerteeinheit, von zumindest einigen der Ladeeinheiten (4) Abmessungen miteinander verglichen werden und dass die Ladeeinheiten (4) nach ihren Abmessungen Abmessungsklassen zugeteilt und entsprechend den Abmessungsklassen und der Beladungskonfiguration in eine Beladereihenfolge sortiert und zu einer oder mehreren Stapelreihen (91) gruppiert werden, wobei die Ladeeinheiten (4) innerhalb einer Stapelreihe (91) in Richtung einer Stapeltiefe (z-Richtung) aufgereiht und mittels der Positionierfördereinrichtung (16) in einem einzigen Beladezyklus nacheinander auf die Beladepositionen (95) abgegeben werden.

2. Verfahren nach Anspruch 1, **dadurch gekennzeichnet, dass** die Abmessungen der Ladeeinheiten (4) von einer Messeinrichtung (98), insbesondere einer optischen Messeinrichtung, wie ein Scanner oder ein Bildverarbeitungssystem, erfasst werden.

3. Verfahren nach Anspruch 1, **dadurch gekennzeichnet, dass** von einer Leseeinheit (99) Daten, insbesondere ein Identifizierungscode und/oder eine Gruppenzuordnung der Ladeeinheiten (4), von einem Datenträger erfasst werden und anhand dieser Daten aus einer Stammdaten-Datenbank Abmessungen aufgerufen werden.

4. Verfahren nach Anspruch 1, **dadurch gekennzeichnet, dass** die Abmessungsklassen jeweils durch einen vom Rechner festgelegten Abmessungsbereich definiert werden.

5. Verfahren nach Anspruch 1, **dadurch gekennzeichnet, dass** die Beladungskonfiguration bezüglich der Stabilität des Ladestapels (3) und/oder der Volumenausnutzung im Ladestapel (3) optimiert wird.

6. Verfahren nach Anspruch 1, **dadurch gekennzeichnet, dass** die Beladung des Ladungsträgers (2) mittels der vom Rechner gesteuerten Positionierfördereinrichtung (16) vollautomatisch ausgeführt wird, wobei die Ladeeinheiten (4) der Positionierfördereinrichtung (16) zur Stapelreihe (91) gruppiert von einer Beschickungsfördereinrichtung (17) zugefördert werden.

7. Verfahren nach Anspruch 1 oder 6, **dadurch gekennzeichnet, dass** beim Beladen des Ladungsträgers (2) die Positionierfördereinrichtung (16) mit den auf ihr auflastenden Ladeeinheiten (4) ausfährt, die Ladeeinheiten (4) auf den Ladungsträger (2) übergibt und wieder zurückfährt, wobei eine Förderebene der Positionierfördereinrichtung (16) während des Zurückfahrens entgegen einer Rückfahrrichtung (79) bewegt und dabei die Ladeeinheiten (4) nacheinander ohne Relativverschiebung zur Förderebene an die festgelegten Beladepositionen (95) abgegeben werden.

8. Verfahren nach Anspruch 7, **dadurch gekennzeichnet, dass** nach der Übernahme einer Ladeeinheit (4.1) einer ersten Stapelreihe (91.1) auf die Beschickungsfördereinrichtung (17) und deren Beförderung von der Beschickungsfördereinrichtung (17) bis zu einer festgelegten Beladeposition (95) im Ladestapel (3) eine Ladeeinheit (4.2) einer zweiten Stapelreihe (91.2) von einer Zuteilfördereinrichtung (90) relativ zur Beschickungsfördereinrichtung (17) in eine Übergabeposition bewegt wird.

9. Verfahren nach Anspruch 8, **dadurch gekennzeichnet, dass** die Stapelreihe (91.1, 91.2) von der Zuteilfördereinrichtung (90) in eine Übergabeposition bewegt wird, wobei die Übergabeposition der durch den Rechner festgelegten Beladeposition (95) im Ladestapel (3) in einer x-Richtung entspricht, wobei die x-Richtung senkrecht zur Stapeltiefe (z-Richtung) verläuft.

10. Verfahren nach Anspruch 8, **dadurch gekennzeichnet, dass** die Stapelreihe (91.1, 91.2) von der Zuteilfördereinrichtung (90) in eine Übergabeposition bewegt wird, wobei die Übergabeposition der durch den Rechner für die Ladeeinheiten (4.1, 4.2) des vorangegangen Beladezykluses festgelegten Beladepositionen (95) im Ladestapel (3) in einer x-Richtung entspricht, wobei die x-Richtung senkrecht zur Stapeltiefe (z-Richtung) verläuft.

11. Verfahren nach Anspruch 1, **dadurch gekennzeichnet, dass** die Ladeeinheiten (4) an der Positionierfördereinrichtung (16) und einer dieser in Förderrichtung (35) vorgeordneten Beschickungsfördereinrichtung (17) auf einer Förderebene gleichzeitig nebeneinander in mehreren Stapelreihen (91) und in einer einzigen Ebene gefördert werden.

## Claims

1. Method of loading a load carrier (2) with loading units (4) forming a load stack (3), whereby a consignment order is detected by a computer and a spatial loading configuration of the loading units (3) is determined for the load stack (3), and the loading units (4) lying directly on a positioning conveyor device (16) are conveyed by the latter to the loading positions (95) determined by the loading configuration and deposited in them on the load carrier (2), **characterised in that** when the consignment order has been detected by the computer, in particular an electronic evaluation unit, dimensions of at least some of the loading units (4) are compared with one another and the loading units (4) are allocated dimension categories on the basis of their dimensions and sorted in a loading sequence based on the dimension categories and loading configuration and grouped in one or more stack rows (91), and the loading units (4) within a stack row (91) are aligned in the direction of a stack depth (z direction) and transferred one after the other to the loading positions (95) by means of the positioning conveyor device (16) in a single loading cycle.

2. Method as claimed in claim 1, **characterised in that** the dimensions of the loading units (4) are detected by a measuring unit (98), in particular an optical measuring unit such as a scanner or an image processing system.

3. Method as claimed in claim 1, **characterised in that** data, in particular an identification code and/or a group allocation of the loading units (4), is detected from a data carrier by means of a reading unit (99) and dimensions are retrieved from a data bank of master data on the basis of this data.

4. Method as claimed in claim 1, **characterised in that** the dimension categories are respectively defined by a range of dimensions fixed by the computer.

5. Method as claimed in claim 1, **characterised in that** the loading configuration is optimised with respect to the stability of the load stack (3) and/or capacity usage in the load stack (3).

6. Method as claimed in claim 1, **characterised in that** the load carrier (2) is loaded by means of the positioning conveyor device (16) on a fully automated basis under the control of the computer, and the loading units (4) of the positioning conveyor device (16) are conveyed to the stack row (19) in groups by a feeding conveyor system (17).

7. Method as claimed in claim 1 or 6, **characterised in that** during loading of the load carrier (2), the positioning conveyor device (16) with the loading units (4) loaded on it moves out, transfers the loading units (4) to the load carrier (2) and moves back in reverse, and a conveyor plane of the positioning conveyor device (16) moves opposite a reversing direction (79) during the reversing movement and the loading units (4) are thus transferred to the set loading positions (95) one after the other without any relative movement with respect to the conveyor plane.

8. Method as claimed in claim 7, **characterised in that** when a loading unit (4.1) of a first stack row (91.1) has been transferred to the feeding conveyor device (17) and conveyed by the feeding conveyor device (17) to a set loading position (95) in the load stack (3), a loading unit (4.2) of a second stack row (91.2) is moved relative to the feeding conveyor device (17) into a transfer position by a distributor conveyor device (90).

9. Method as claimed in claim 8, **characterised in that** the stack row (91.1, 91.2) is moved by the distributor conveyor device (90) into a transfer position, and the transfer position corresponds to the loading position (95) in the load stack (3) in an x direction set by the computer, and the x direction extends perpendicular to the stack depth (z direction).

10. Method as claimed in claim 8, **characterised in that** the stack row (91.1, 91.2) is moved by the distributor conveyor device (90) into a transfer position, and the transfer position corresponds to the loading positions (95) in the load stack (3) in an x-direction set by the computer for the loading units (4.1, 4.2) of the preceding loading cycle.

11. Method as claimed in claim 1, **characterised in that** the loading units (4) are conveyed on the positioning conveyor device (16) and a feeding conveyor device (17) disposed upstream of it in the conveying direction on one conveyor plane simultaneously, adjacent to one another in several stack rows and in a single plane.

## Revendications

1. Procédé permettant de charger des unités de chargement (4) formant une pile de chargement (3) sur un support de chargement (2), dans lequel un ordre de préparation de commande est lu et un plan de chargement dimensionnel des unités de chargement (4) pour la pile de chargement (3) est calculé par un ordinateur et dans lequel les unités de chargement (4) sont transportées au moyen d'un convoyeur de positionnement (16), en reposant directement sur celui-ci, jusqu'aux positions de chargement (95) déterminées par le plan de chargement et déposées à ces positons sur le support de chargement (2), **caractérisé en ce qu'**après la lecture de l'ordre de préparation de commande par l'ordinateur, en particulier une unité d'analyse électronique, des dimensions d'au moins certaines des unités de chargement (4) sont comparées les unes aux autres et **en ce que** les unités de chargement (4) sont réparties en fonction de leurs dimensions dans des catégories de dimensions et sont triées en fonction des catégories de dimensions et du plan de chargement dans une séquence de chargement et groupées dans une ou plusieurs rangées de piles (91), étant entendu que les unités de chargement (4) sont alignées à l'intérieur d'une rangée de piles (91) dans la direction d'une profondeur de pile (direction z) et déposées les unes après les autres aux positions de chargement (95) dans un cycle de chargement unique au moyen du convoyeur de positionnement (16).

2. Procédé selon la revendication 1, **caractérisé en ce que** les dimensions des unités de chargement (4) sont saisies par un dispositif de mesure (98), en particulier un dispositif de mesure optique, comme un scanner ou un système de traitement d'image.

3. Procédé selon la revendication 1, **caractérisé en ce que** des données, en particulier un code d'identification et/ou une attribution à un groupe des unités de chargement (4), d'un support de données sont saisies par une unité de lecture (99) et **en ce que** des dimensions sont consultées dans une banque de données de référence sur la base de ces données.

4. Procédé selon la revendication 1, **caractérisé en ce que** les catégories de dimensions sont chacune définies par une plage de dimensions établie par l'ordinateur.

5. Procédé selon la revendication 1, **caractérisé en ce que** le plan de chargement est optimisé en ce qui concerne la stabilité de la pile de chargement (3) et/ou l'exploitation du volume dans la pile de chargement (3).

6. Procédé selon la revendication 1, **caractérisé en ce que** le chargement sur le support de chargement (2) est réalisé entièrement automatiquement au moyen du convoyeur de positionnement (16) commandé par l'ordinateur, étant entendu que les unités de chargement (4) sont amenées au convoyeur de positionnement (16) par un convoyeur d'alimentation (17) de façon groupée en formant une rangée de piles (91).

7. Procédé selon la revendication 1 ou 6, **caractérisé en ce que** lors du chargement sur le support de chargement (2), le convoyeur de positionnement (16) démarre avec les unités de chargement (4) chargées sur celui-ci, il transfère les unités de chargement (4) sur le support de chargement (2) et il recule à nouveau, étant entendu qu'un plan de transport du convoyeur de positionnement (16) est déplacé pendant le recul dans le sens opposé à une direction de recul (79) et les unités de chargement (4) sont ainsi déposées les unes après les autres aux positions de chargement (95) définies sans décalage relatif par rapport au plan de transport.

8. Procédé selon la revendication 7, **caractérisé en ce qu'**après l'enlèvement d'une unité de chargement (4.1) d'une première rangée de piles (91.1) sur le convoyeur d'alimentation (17) et son transport depuis le convoyeur d'alimentation (17) jusqu'à une position de chargement (95) définie dans la pile de chargement (3), une unité de chargement (4.2) d'une deuxième rangée de piles (91.2) est déplacée dans une position de prise par rapport au convoyeur d'alimentation (17) par un convoyeur d'attribution (90).

9. Procédé selon la revendication 8, **caractérisé en ce que** la rangée de piles (91.1, 91.2) est déplacée dans une position de prise par le convoyeur d'attribution (90), étant entendu que la position de prise correspond à la position de chargement (95) dans la pile de chargement (3) déterminée par l'ordinateur dans une direction x, la direction x étant perpendiculaire à la profondeur de pile (direction z).

10. Procédé selon la revendication 8, **caractérisé en ce que** la rangée de piles (91.1, 91.2) est déplacée dans une position de prise par le convoyeur d'attribution (90), étant entendu que la position de prise correspond aux positions de chargement (95) dans la pile de chargement (3) déterminées par l'ordinateur pour les unités de chargement (4.1, 4.2) du cycle de chargement précédent dans une direction x, la direction x étant perpendiculaire à la profondeur de pile (direction z).

11. Procédé selon la revendication 1, **caractérisé en ce que** les unités de chargement (4) sont amenées au convoyeur de positionnement (16) et à un convoyeur d'alimentation (17) agencé en amont de celui-ci dans la direction de transport (35) dans un plan de transport simultanément les unes à côté des autres dans plusieurs rangées de piles (91) et dans un seul plan.
